# EUROPEAN PATENT SPECIFICATION

(11) **EP 4 290 923 B1**
(45) Date of publication and mention of the grant of the patent: **23.09.2026**
(21) Application number: 22762587.8
(22) Date of filing: 03.03.2022
(51) Int. Cl.: H04W 28/08, H04W 36/22, G06N 3/08

(54) **LOADING BALANCE METHOD AND APPARATUS, AND READABLE STORAGE MEDIUM**
LADEAUSGLEICHSVERFAHREN UND -VORRICHTUNG UND LESBARES SPEICHERMEDIUM
PROCÉDÉ ET APPAREIL D'ÉQUILIBRAGE DE CHARGE, ET SUPPORT DE STOCKAGE LISIBLE

(30) Priority: 05.03.2021 CN 202110247261
(43) Date of publication of application: 13.12.2023
(73) Proprietor: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2022/078983
(87) International publication number: WO 2022/184125

(56) References cited:
- EP-B1- 3 318 082
- CN-A- 106 714 239
- CN-A- 108 541 022
- CN-A- 110 868 737
- CN-A- 111 050 330
- CN-A- 111 726 833
- CN-A- 111 935 777
- US-A1- 2015 031 360
- US-A1- 2018 192 324

## Description

### TECHNICAL FIELD

This application relates to the field of wireless communication technologies, and in particular, to a load balancing method and apparatus, and a communication system.

### BACKGROUND

Mobility load balancing (Mobility Loading Balance, MLB) is an important function of automatic network optimization. Cells in a network have different coverage areas. Some cells have more loads than their neighboring cells, resulting in load imbalance between cells and between base stations. In this case, resources of a cell with a small load are wasted and user experience is affected. Therefore, a cell load needs to be adjusted through MLB.

In an existing communication technology, base stations exchange a resource usage status, and adjust parameter configurations of the base stations based on the resource usage status, thereby implementing MLB. However, performance of an existing MLB method is poor, which causes a loss of network performance. Therefore, a better MLB method is urgently needed.

CN111726833A discloses a network load balancing method, a network load balancing device and a storage medium, which are used for ensuring the service quality and the utilization efficiency of network resources while balancing the network load. The method comprises predicting the cell load state information of the network cell in the current period, and determining a candidate switching cell set and/or a candidate frequency point set which needs network load balancing according to the cell load state information. The method further comprises predicting user behavior information of users accessed to the candidate switching cell and/or the candidate frequency point according to the real-time measurement information of the users in the candidate switching cell and/or the candidate frequency point set.

### SUMMARY

The above mentioned problems are solved by the communication method, the apparatus, and the communication system according to the claims.
Embodiments of the present invention provide a communication method and apparatus, where an MLB policy including one or more of time information or reliability information is formulated, to dynamically control a parameter of a network device by using the MLB policy including the time information to enhance parameter configuration flexibility, so as to adapt to a complex network load status and improve performance of the MLB policy; or to determine application of the MLB policy based on credibility of the MLB policy by using the MLB policy including the reliability information, thereby improving performance of the MLB policy.

The invention is set out in the appended set of claims. According to a first aspect, a communication method is provided. The method may be performed by a first network device, may be performed by an operation and management entity that can configure and manage a network device, or may be performed by a means (a chip, a circuit, or the like) configured in a first network device or an operation and management entity. The method includes: obtaining first network status information of the first network device; obtaining information indicating a network status of a second network device; obtaining a to-be-effective first mobility load balancing MLB policy based on the first network status information of a first network device and the information indicating a network status of the second network device; and sending the first MLB policy to the second network device. The first MLB policy includes at least one of the following content: a configuration parameter used to adjust a load of the first network device and time information corresponding to the configuration parameter used to adjust the load of the first network device, a configuration parameter used to adjust a load of the second network device and time information corresponding to the configuration parameter used to adjust the load of the second network device, or reliability information of the first MLB policy.

An execution body of the foregoing implementation method may be the first network device, for example, a base station; or may be an operation and management entity, for example, an operation, administration and maintenance (operation, administration and maintenance, OAM) network device. When the execution body is the operation and management entity, the first network status information of the first network device may alternatively be information that is of the first network device and that indicate a network status, network status information predicted by the first network device, or a tenth predicted load value of the first network device. In a subsequent implementation method of the first aspect, the first network status information may all be the information indicating a network status of the first network device. Details are not described again. When the execution body is the operation and management entity, the implementation method may further include: sending the first MLB policy to the first network device.

The foregoing implementation method may include interaction with a plurality of second network devices. Optionally, the execution body of the foregoing method may determine, based on a specific design and implementation, a range of the second network device in implementation of the method. Optionally, the configuration parameter used to adjust the load of the first network device and the time information corresponding to the configuration parameter used to adjust the load of the first network device may include a plurality of groups of configuration parameters used to adjust the load of the first network device and time information corresponding to the configuration parameters used to adjust the load of the first network device; and/or the configuration parameter used to adjust the load of the second network device and the time information corresponding to the configuration parameter used to adjust the load of the second network device may also include a plurality of groups of configuration parameters used to adjust the load of the second network device and time information corresponding to the configuration parameters used to adjust the load of the second network device, so as to adjust a parameter configuration of a network device more dynamically and better adapt to a complex network load situation.

According to the foregoing method, time information is introduced into an MLB policy, so that a parameter configuration of a network device can be dynamically adjusted, thereby adapting to a complex network load status and improving performance of the MLB policy; or reliability of the MLB policy is indicated in the MLB policy, so that application of the MLB policy can be determined based on credibility of the MLB policy, thereby improving performance of the MLB policy.

With reference to the first aspect, in a first possible implementation of the first aspect, the obtaining information indicating a network status of the second network device includes: sending first query information to the second network device, where the first query information is used to request the information indicating a network status; and receiving first acknowledgement information from the second network device, where the first acknowledgement information responds to the first query information and carries the information indicating a network status of the second network device. The information indicating a network status of the second network device includes at least one of the following: current network status information of the second network device, network status information predicted by the second network device, or a third predicted load value of the second network device.

If the execution body is the operation and management entity, the first possible implementation of the first aspect further includes: sending third query information to the first network device, where the third query information is used to request the information indicating a network status of the first network device; and receiving third acknowledgement information from the first network device, where the third acknowledgement information responds to the third query information and indicates the information indicating a network status of the first network device. The information indicating a network status of the first network device includes at least one of the following: current network status information of the first network device, network status information predicted by the first network device, or the tenth predicted load value of the first network device.

According to the foregoing method, the execution body may obtain input information related to determining of the first MLB policy, so as to provide a necessary condition for determining the first MLB policy.

With reference to the first aspect or the first possible implementation of the first aspect, in a second possible implementation of the first aspect, the obtaining a to-be-effective first MLB policy based on the first network status information of the first network device and the information indicating a network status of the second network device includes: obtaining, based on the first network status information of the first network device and the information indicating a network status of the second network device, at least one of a first predicted load value of the first network device at first time in a current MLB policy or a second predicted load value of the second network device at the first time in the current MLB policy; and obtaining the to-be-effective first MLB policy based on at least one of the first predicted load value or the second predicted load value.

With reference to the second possible implementation of the first aspect, in a third possible implementation of the first aspect, the obtaining, based on the first network status information of the first network device and the information indicating a network status of the second network device, at least one of a first predicted load value of the first network device at first time in a current MLB policy or a second predicted load value of the second network device at the first time in the current MLB policy includes: performing at least one of the following by using a first neural network: predicting a load value of the first network device based on the current MLB policy, to obtain the first predicted load value at the first time; or predicting a load value of the second network device based on the current MLB policy, to obtain the second predicted load value at the first time. An input of the first neural network includes the first network status information of the first network device, the information indicating a network status of the second network device, and the current MLB policy, and an output of the first neural network includes at least one of the first predicted load value or the second predicted load value.

With reference to the second and the third possible implementations of the first aspect, in a fourth possible implementation of the first aspect, the obtaining, based on the first network status information of the first network device and the information indicating a network status of the second network device, at least one of a first predicted load value of the first network device at first time in a current MLB policy or a second predicted load value of the second network device at the first time in the current MLB policy includes: obtaining, based on the first network status information of the first network device and the information indicating a network status of the second network device, the first predicted load value of the first network device at the first time in the current MLB policy; and the obtaining the to-be-effective first MLB policy based on at least one of the first predicted load value or the second predicted load value includes: obtaining the to-be-effective first MLB policy by using a second neural network. An input of the second neural network includes the information indicating a network status of the second network device or the second predicted load value, and the first predicted load value, and an output of the second neural network includes the to-be-effective first MLB policy.

According to the foregoing method, a load value is predicted, and the predicted load value is used as a basis for obtaining an MLB policy, so that the MLB policy can adapt to a changing network load status, thereby improving performance of the MLB policy.

With reference to the second to the fourth possible implementations of the first aspect, a fifth possible implementation of the first aspect includes: obtaining, by using the first neural network, at least one of a fourth predicted load value that is of the first network device at the first time under action of the first MLB policy or a fifth predicted load value that is of the second network device at the first time under action of the first MLB policy; and sending at least one of the fourth predicted load value or the fifth predicted load value to the second network device.

If the execution body is the operation and management entity, the fifth possible implementation of the first aspect further includes: sending at least one of the fourth predicted load value or the fifth predicted load value to the first network device.

According to the foregoing method, the first network device and the second network device may obtain at least one of the fourth predicted load value or the fifth predicted load value, to provide information for subsequent running of the first network device and/or the second network device. For example, update of an MLB policy is triggered based on the fourth predicted load value and/or the fifth predicted load value.

With reference to the first aspect and the first to the fifth possible implementations of the first aspect, a sixth possible implementation of the first aspect includes: determining that the second network device successfully modifies, based on the first MLB policy, the parameter used to adjust the load of the second network device; and modifying, based on the first MLB policy, the parameter used to adjust the load of the first network device; obtaining a first actual load value of the first network device at the first time in the first MLB policy, and obtaining, by using the first neural network, the fourth predicted load value that is of the first network device at the first time under action of the first MLB policy; and optimizing at least one of the first neural network or the second neural network based on the fourth predicted load value and the first actual load value; and/or obtaining a second actual load value of the second network device at the first time in the first MLB policy, and obtaining, by using the first neural network, the fifth predicted load value that is of the second network device at the first time under action of the first MLB policy; and optimizing at least one of the first neural network or the second neural network based on the fifth predicted load value and the second actual load value.

With reference to the sixth possible implementation of the first aspect, a seventh possible implementation of the first aspect includes: receiving, from the second network device, information indicating the second actual load value of the second network device.

If the execution body is the operation and management entity, the seventh possible implementation of the first aspect further includes: receiving, from the first network device, information indicating the first actual load value of the first network device.

With reference to the first aspect and the first to the fifth possible implementations of the first aspect, an eighth possible implementation of the first aspect includes: receiving feedback information from the second network device, where the feedback information indicates a cause of a failure in modifying, by the second network device based on the first MLB policy, the parameter used to adjust the load of the second network device; and optimizing the first neural network and/or the second neural network based on the feedback information.

If the execution entity is the operation and management entity, the eighth possible implementation of the first aspect further includes: receiving feedback information from the first network device, where the feedback information indicates a cause of a failure in modifying, by the first network device based on the first MLB policy, the parameter used to adjust the load of the first network device; and optimizing the first neural network and/or the second neural network based on the feedback information.

According to the foregoing method, the first neural network and/or the second neural network may be optimized, thereby improving accuracy of load prediction and an MLB policy.

With reference to the first aspect and the first to the eighth possible implementations of the first aspect, a ninth possible implementation of the first aspect includes: determining, based on accuracy of at least one of a sixth predicted load value or a seventh predicted load value and accuracy of at least one of an eighth predicted load value or a ninth predicted load value, that at least one of the sixth predicted load value or the seventh predicted load value is better, where the sixth predicted load value is a predicted load value that is obtained by the first network device and that is of the first network device at second time in the current MLB policy; the seventh predicted load value is a predicted load value that is obtained by the first network device and that is of the second network device at the second time in the current MLB policy; the eighth predicted load value is a predicted load value that is obtained by the second network device and that is of the first network device at the second time in the current MLB policy; and the ninth predicted load value is a predicted load value that is obtained by the second network device and that is of the first network device at the second time in the current MLB policy.

With reference to the ninth possible implementation of the first aspect, a tenth possible implementation of the first aspect includes: obtaining accuracy of at least one of the sixth predicted load value or the seventh predicted load value and accuracy of at least one of the eighth predicted load value or the ninth predicted load value. The obtaining accuracy of the sixth predicted load value includes: obtaining the sixth predicted load value based on the first network status information of the first network device and the information indicating a network status of the second network device; obtaining a third actual load value of the first network device in the current MLB policy, where the third actual load value is an actual load value of the first network device at the second time; and obtaining the accuracy of the sixth predicted load value based on the sixth predicted load value and the third actual load value. The obtaining accuracy of the eighth predicted load value includes: receiving the eighth predicted load value from the second network device, where the eighth predicted load value is a load value that is of the first network device at the second time and that is predicted by the second network device in the current MLB policy; obtaining the third actual load value of the first network device in the current MLB policy, where the third actual load value is an actual load value of the first network device at the second time; and obtaining the accuracy of the eighth predicted load value based on the eighth predicted load value and the third actual load value. The obtaining accuracy of the seventh predicted load value includes: obtaining, based on the first network status information of the first network device and the information indicating a network status of the second network device, the seventh predicted load value of the second network device at the second time in the current MLB policy; receiving a fourth actual load value that is from the second network device and that is of the second network device in the current MLB policy, where the fourth actual load value is an actual load value of the second network device at the second time; and obtaining the accuracy of the seventh predicted load value based on the seventh predicted load value and the fourth actual load. The obtaining accuracy of the ninth predicted load value includes: receiving, from the second network device, the ninth predicted load and the fourth actual load value that is of the second network device in the current MLB policy, where the ninth predicted load is a load value that is of the second network device at the second time and that is predicted by the second network device in the current MLB policy, and the fourth actual load value is an actual load value of the second network device at the second time; and obtaining the accuracy of the ninth predicted load value based on the ninth predicted load value and the fourth actual load.

With reference to the ninth possible implementation of the first aspect, an eleventh possible implementation of the first aspect includes: sending a third actual load value and at least one of the sixth predicted load value or the seventh predicted load value to the second network device; or sending the seventh predicted load value to the second network device.

With reference to the ninth possible implementation of the first aspect, a twelfth possible implementation of the first aspect includes: receiving, from the second network device, a request for neural network optimization information; and sending the neural network optimization information to the second network device, where the neural network optimization information includes at least one of the following content: parameter-related information of the first neural network and/or the second neural network; input information of the first neural network and/or the second neural network; or a result of analyzing a cause of a difference between an actual load and a predicted load.

According to the foregoing method, a predicted load value with high accuracy is determined to determine a device with high prediction accuracy, so as to optimize a neural network of another device by sharing related information of a neural network with better performance, to obtain a more accurate predicted load value and MLB policy.

According to a second aspect, a communication method is provided. The method may be performed by a second network device, or a means (a chip, a circuit, or the like) configured in a second network device, and includes: The second network device sends information indicating a network status of the second network device; and the second network device receives a first mobility load balancing MLB policy, where the first MLB policy is based on the information indicating a network status of the second network device; and the first MLB policy includes at least one of the following content: a configuration parameter used to adjust a load of a first network device and time information corresponding to the configuration parameter used to adjust the load of the first network device, a configuration parameter used to adjust a load of the second network device and time information corresponding to the configuration parameter used to adjust the load of the second network device, or reliability information of the first MLB policy.

With reference to the second aspect, in a first possible implementation of the second aspect, that the second network device sends information indicating a network status of the second network device includes: The second network device receives first query information; and the second network device sends first acknowledgement information, where the first acknowledgement information responds to the first query information and includes the information indicating a network status of the second network device. The information indicating a network status of the second network device includes at least one of the following: current network status information of the second network device, network status information predicted by the second network device, or a third predicted load value of the second network device.

With reference to the second aspect and the first possible implementation of the second aspect, a second possible implementation of the second aspect includes: The second network device receives at least one of a fourth predicted load value or a fifth predicted load value, where the fourth predicted load value is a load value that is of the first network device at first time and that is predicted in the first MLB policy, and the fifth predicted load value is a predicted value that is of the second network device at the first time and that is predicted in the first MLB policy.

With reference to the second aspect and the first and the second possible implementations of the second aspect, a third possible implementation of the second aspect includes: The second network device modifies, based on the first MLB policy, the parameter used to adjust the load of the second network device, and sends a second actual load value that is of the second network device at the first time; or the second network device sends feedback information when the second network device fails to modify the parameter used to adjust the load of the second network device, where the feedback information indicates a cause of a failure in modifying a second parameter configuration.

With reference to the second aspect and the first to the third possible implementations of the second aspect, a fourth possible implementation of the second aspect includes: The second network device obtains an eighth predicted load value of the first network device at second time in a current MLB policy, and sends the eighth predicted load value, so that another device obtains accuracy of the eighth predicted load value; or the second network device obtains at least one of the eighth predicted load value of the first network device at the second time in the current MLB policy or a ninth predicted load value that is of the second network device at the second time and that is predicted in the current MLB policy, and a fourth actual load value of the second network device at the second time in the current MLB policy; and sends the fourth actual load value and at least one of the eighth predicted load value or the ninth predicted load value, so that another device obtains accuracy of at least one of the eighth predicted load value or the ninth predicted load value.

With reference to the second aspect and the first to the fourth possible implementations of the second aspect, a fifth possible implementation of the second aspect includes: The second network device receives a sixth predicted load value and a third actual load value, where the sixth predicted load value is a load value that is of the first network device at the second time and that is predicted by another device in the current MLB policy, and the third actual load value is an actual load value of the first network device at the second time; the second network device calculates accuracy of the sixth predicted load value and the eighth predicted load value based on the sixth predicted load value, the eighth predicted load value, and the third actual load value; and determines that the sixth predicted load value is better; and/or
the second network device receives a seventh predicted load value, where the seventh predicted load value is a load value that is of the second network device at the second time and that is predicted by another device in the current MLB policy; the second network device calculates accuracy of the seventh predicted load value and the ninth predicted load value based on the seventh predicted load value, the ninth predicted load value, and the fourth actual load value; and determines that the seventh predicted load value is better; and/or
the second network device receives the sixth predicted load value and the third actual load value, where the sixth predicted load value is a load value that is of the first network device at the second time and that is predicted by another device in the current MLB policy, and the third actual load value is an actual load value of the first network device at the second time; the second network device calculates accuracy of the sixth predicted load value and the ninth predicted load value based on the sixth predicted load value, the third actual load value, the ninth predicted load value, and the fourth actual load value; and determines that the sixth predicted load value is better; and/or
the second network device receives the seventh predicted load value and the third actual load value, where the seventh predicted load value is a load value that is of the second network device at the second time and that is predicted by another device in the current MLB policy, and the third actual load value is an actual load value of the first network device at the second time; the second network device calculates accuracy of the seventh predicted load value and the eighth predicted load value based on the seventh predicted load value, the eighth predicted load value, the third actual load value, and the fourth actual load value; and determines that the seventh predicted load value is better.

A third aspect of the embodiments of this application provides a communication apparatus. The apparatus provided in this application has a function of implementing behavior of the first network device or the operation and management entity in the foregoing method aspect, and includes a corresponding means (means) configured to perform steps or functions described in the foregoing method aspect. The steps or the functions may be implemented by using software, hardware, or a combination of hardware and software.

In a possible design, the apparatus includes one or more processors, and may further include a communication unit. The one or more processors are configured to support the apparatus in performing corresponding functions of the first network device or the operation and management entity in the foregoing method, for example, obtaining a first MLB policy. The communication unit is configured to support the apparatus in communicating with another device, to implement a receiving function and/or a sending function, for example, sending the first MLB policy to another device.

Optionally, the apparatus may further include one or more memories. The memory is configured to be coupled to the processor, and store program instructions and/or data that are/is necessary for the apparatus. The one or more memories may be integrated with the processor, or may be disposed separated from the processor. This is not limited in this application.

The apparatus may be a base station, a next generation NodeB (Next Generation NodeB, gNB), a transmitting and receiving point (Transmitting and Receiving Point, TRP), a distributed unit (distributed unit, DU), a centralized unit (centralized unit, CU), an OAM, or the like. The communication unit may be a transceiver or a transceiver circuit. Optionally, the transceiver may alternatively be an input/output circuit or an interface.

The apparatus may alternatively be a chip. The communication unit may be an input/output circuit or an interface that is of the chip.

In another possible design, the apparatus includes a transceiver, a processor, and a memory. The processor is configured to control the transceiver to send and receive a signal, the memory is configured to store a computer program, and the processor is configured to run the computer program in the memory, so that the apparatus performs the method completed by the network device or the operation and management entity in the first aspect.

In a possible design, the apparatus includes one or more processors, and may further include a communication unit. The one or more processors are configured to support the apparatus in performing corresponding functions of the second network device in the foregoing method, for example, determining information indicating a network status of the second network device. The communication unit is configured to support the apparatus in communicating with another device, to implement a receiving function and/or a sending function, for example, receiving a first MLB policy.

Optionally, the apparatus may further include one or more memories. The memory is configured to be coupled to the processor, and store program instructions and/or data that are/is necessary for the apparatus. The one or more memories may be integrated with the processor, or may be disposed separated from the processor. This is not limited in this application.

The apparatus may be a base station, a next generation NodeB (Next Generation NodeB, gNB), a transmitting and receiving point (Transmitting and Receiving Point, TRP), a distributed unit (distributed unit, DU), a centralized unit (centralized unit, CU), or the like. The communication unit may be a transceiver or a transceiver circuit. Optionally, the transceiver may alternatively be an input/output circuit or an interface.

The apparatus may alternatively be a chip. The communication unit may be an input/output circuit or an interface that is of the chip.

In another possible design, the apparatus includes a transceiver, a processor, and a memory. The processor is configured to control the transceiver to send and receive a signal, the memory is configured to store a computer program, and the processor is configured to run the computer program in the memory, so that the apparatus performs the method completed by the network device in the second aspect.

According to a fourth aspect, a system is provided. The system includes one or more of the first network device, the second network device, or the operation and management entity.

According to a fifth aspect, a readable storage medium or a program product is provided, which is configured to store a program. The program includes instructions used to perform the method in the first aspect or the second aspect.

According to a sixth aspect, a readable storage medium or a program product is provided, which is configured to store a program. When the program is run on a processor, an apparatus including the processor is enabled to execute instructions of the method in the first aspect or the second aspect.

It should be understood that technical solutions in the second aspect to the sixth aspect of this application correspond to the technical solution in the first aspect of this application, and beneficial effects achieved by the aspects and the corresponding feasible implementations are similar. Details are not described again.

### BRIEF DESCRIPTION OF DRAWINGS

FIG. 1 is a schematic diagram of a communication system according to an embodiment of this application;
FIG. 2 is a schematic diagram of a network architecture in which a plurality of DUs share one CU according to an embodiment of this application;
FIG. 3 is a schematic diagram of protocol layer functions of a CU and a DU according to an embodiment of this application;
FIG. 4 is a schematic diagram of RRC status transition according to an embodiment of this application;
FIG. 5 is a schematic diagram of a resource status reporting initialization procedure according to an embodiment of this application;
FIG. 6 is a schematic diagram of a resource status reporting procedure according to an embodiment of this application;
FIG. 7 is a schematic diagram of a mobility settings change procedure according to an embodiment of this application;
FIG. 8 is a schematic diagram of a structure of a neuron according to an embodiment of this application;
FIG. 9 is a schematic diagram of a relationship between layers in a neural network according to an embodiment of this application;
FIG. 10 is a flowchart of a possible implementation according to an embodiment of this application;
FIG. 11 is a schematic flowchart of a communication method according to an embodiment of this application;
FIG. 12a is a schematic flowchart of a communication method according to an embodiment of this application;
FIG. 12b is a schematic flowchart of a communication method according to an embodiment of this application;
FIG. 12c is a schematic flowchart of a communication method according to an embodiment of this application;
FIG. 13 is a schematic flowchart of a communication method according to an embodiment of this application;
FIG. 14a is a schematic flowchart of a communication method according to an embodiment of this application;
FIG. 14b is a schematic flowchart of a communication method according to an embodiment of this application;
FIG. 14c is a schematic flowchart of a communication method according to an embodiment of this application;
FIG. 15 is a schematic flowchart of a communication method according to an embodiment of this application;
FIG. 16A and FIG. 16B are a schematic flowchart of a communication method according to an embodiment of this application;
FIG. 17 is a schematic diagram of a structure of an access network device according to an embodiment of this application; and
FIG. 18 is a schematic diagram of a structure of a communication apparatus according to an embodiment of this application.

### DESCRIPTION OF EMBODIMENTS

To clearly describe the technical solutions in embodiments of this application, terms such as "first" and "second" are used in embodiments of this application to distinguish between same items or similar items that have basically same functions or purposes. For example, first information and second information are merely intended to distinguish between different information, and are not intended to limit a sequence of the first information and the second information. A person skilled in the art may understand that the terms such as "first" and "second" do not limit a quantity and an execution sequence, and the terms such as "first" and "second" do not indicate a definite difference.

It should be noted that in embodiments of this application, the word such as "example" or "for example" is used to represent giving an example, an illustration, or a description. Any embodiment or design solution described as "example" or "for example" in this application should not be explained as being more preferred or having more advantages than another embodiment or design solution. Exactly, use of the word such as "example" or "for example" is intended to present a related concept in a specific manner.

**In** embodiments of this application, "at least one" means one or more, and "a plurality of" means two or more. "And/or" describes an association relationship between associated objects and represents that three relationships may exist. For example, "A and/or B" may represent the following cases: Only A exists, both A and B exist, and only B exists, where A and B may be singular or plural. The character "/" usually indicates an "or" relationship between associated objects, but may also indicate an "and/or" relationship. For details, refer to the foregoing and subsequent descriptions for understanding. "At least one of the following items" or a similar expression thereof refers to any combination of these items, including a singular item or any combination of plural items. For example, at least one of a, b, or c may indicate: a, b, c, a and b, a and c, b and c, or a, b, and c, where a, b, and c may be singular or plural.

The technical solutions in the embodiments of this application may be used in various communication systems, for example, a long term evolution (long term evolution, LTE) system, a worldwide interoperability for microwave access (worldwide interoperability for microwave access, WiMAX) communication system, a 5th generation (5th Generation, 5G) system such as a new radio access technology (new radio access technology, NR), a network that integrates a plurality of systems, an Internet of Things system, an Internet of Vehicles system, and a future communication system such as a 6G system.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of a new service scenario, the technical solutions provided in the embodiments of this application are also applicable to similar technical problems.

In the embodiments of this application, different base stations may be base stations having different identifiers, or may be base stations that have a same identifier and that are deployed at different geographical locations. In some scenarios, before a base station is deployed, the base station does not know whether the base station is related to a scenario to which the embodiments of this application are applied. The base station or a baseband chip may support, before being deployed, the methods provided in the embodiments of this application. In some scenarios, the methods provided in the embodiments of this application may alternatively be supported through upgrade or loading performed after deployment. It may be understood that the base stations having different identifiers may correspond to base station identifiers, or may correspond to cell identifiers or other identifiers.

In the embodiments of this application, an NR network scenario in a wireless communication network is used as an example to describe some scenarios. It should be noted that the solutions in the embodiments of this application may further be applied to another wireless communication network, and a corresponding name may also be replaced with a name of a corresponding function in the another wireless communication network.

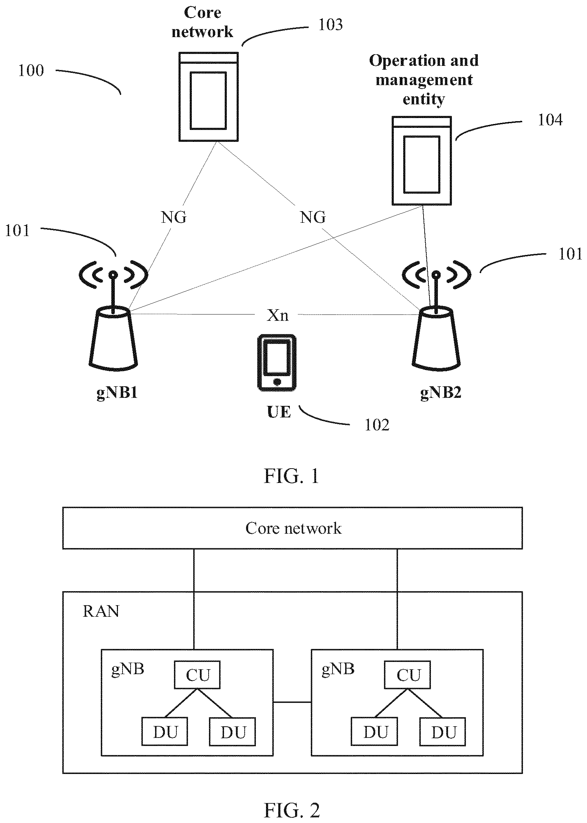

For ease of understanding of the embodiments of this application, a communication system shown in FIG. 1 is first used as an example to describe in detail a communication system applicable to the embodiments of this application. FIG. 1 is a schematic diagram of a communication system applicable to a communication method according to an embodiment of this application. As shown in FIG. 1, the communication system 100 includes an access network device 101 (a gNB1 and a gNB2), user equipment (user equipment, UE) 102, a core network (core network, CN) device 103, and an operation and management entity 104. The access network device 101 may be configured with a plurality of antennas, and the UE 102 may also be configured with a plurality of antennas. The access network device and the core network device may be collectively referred to as a network device or a network-side device, and an access network and a core network may be collectively referred to as a network side.

It should be understood that the access network device and a terminal may further include a plurality of means (for example, a processor, a modulator, a multiplexer, a demodulator, or a demultiplexer) related to signal sending and receiving.

The access network device is a radio access network (radio access network, RAN) node (or device) that enables a terminal to access to a wireless network, and may also be referred to as a base station. The access network device is a device having a wireless receiving/transmitting function or a chip that can be disposed in the device. The device may cover the following various names in a broad sense, or may have names replaced with the following names, for example, a NodeB (NodeB), an evolved NodeB (evolved NodeB, eNB), a gNB, a relay station, an access point, a TRP, a transmitting point (transmitting point, TP), a master NodeB MeNB, a secondary NodeB SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a centralized unit (CU), a distribution unit (DU), a positioning node, and the like. The base station may be a macro base station, a micro base station, a relay node, a donor node, or the like, or a combination thereof. The base station may alternatively be a communication module, a modem, or a chip that is configured to be disposed in the foregoing device or apparatus. The base station may alternatively be a mobile switching center, a device that undertakes a base station function in D2D, V2X, or M2M communication, a network-side device in a 6G network, a device that undertakes a base station function in a future communication system, or the like. The base station may support networks of a same access technology or different access technologies. A specific technology and a specific device form used by a network device are not limited in this embodiment of this application.

The device may be fixed or may be mobile. For example, a helicopter or an unmanned aerial vehicle may be configured as a mobile base station, and one or more cells may move based on a location of the mobile base station. In another example, a helicopter or an unmanned aerial vehicle may be configured as a device for communicating with another base station.

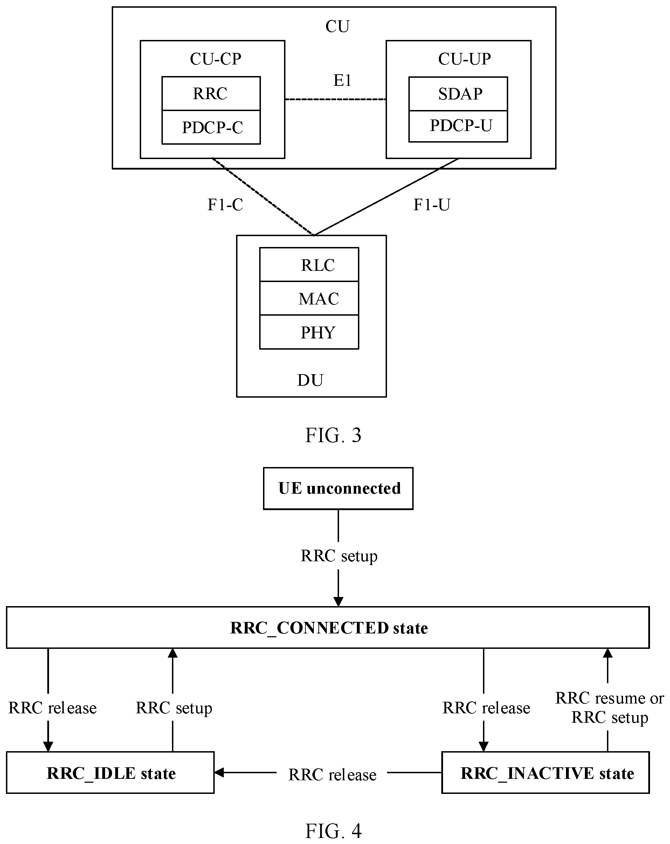

In some deployments, the access network device (for example, a gNB) may include a BBU and an RRU. Some baseband functions, such as a beamforming function, may be implemented in the BBU or may be implemented in the RRU. A connection interface between the BBU and the RRU may be a common public radio interface (common public radio interface, CPRI), or an enhanced common public radio interface (enhance CPRI, eCPRI). In some other deployments, the access network device may include a CU and a DU. The CU and the DU may be understood as division of a base station from a perspective of a logical function. The CU and the DU may be physically separated, or may be deployed together. For example, a plurality of DUs may share one CU, or one DU may be connected to a plurality of CUs, and the CU and the DU may be connected through an F1 interface. For example, FIG. 2 is a schematic diagram of a network architecture in which a plurality of DUs share one CU according to an embodiment of this application. As shown in FIG. 2, a core network and a RAN are interconnected and communicate with each other, a gNB in the RAN is separated into a CU and a DU, and a plurality of DUs share one CU. The network architecture shown in FIG. 2 may be applied to a 5G communication system, and may further share one or more means or resources with an LTE system. An access network device including a CU node and a DU node splits protocol layers. Functions of some protocol layers are centrally controlled by a CU, and functions or some or all of remaining protocol layers are distributed in a DU, and the CU centrally controls the DU. In an implementation, as shown in FIG. 3, the CU is deployed with a radio resource control (radio resource control, RRC) layer, a packet data convergence protocol (packet data convergence protocol, PDCP) layer, and a service data adaptation protocol (service data adaptation protocol, SDAP) layer in a protocol stack; and the DU is deployed with a radio link control (radio link control, RLC) layer, a media access control (media access control, MAC) layer, and a physical layer (physical layer, PHY) in the protocol stack. Therefore, the CU has a capability of processing the RRC, the PDCP, and the SDAP, and the DU has a capability of processing the RLC, the MAC, and the PHY. It may be understood that the foregoing function division is merely an example, and does not constitute a limitation on the CU and the DU.

Functions of the CU may be implemented by one entity, or may be implemented by different entities. For example, the functions of the CU may be further divided. For example, a control plane (control panel, CP) and a user plane (user panel, UP) are separated, that is, a control plane of the CU (CU-CP) and a user plane of the CU (CU-UP) are separated. For example, the CU-CP and the CU-UP may be implemented by different function entities. The CU-CP and the CU-UP may be coupled to the DU to jointly complete functions of the gNB. In a possible manner, the CU-CP is responsible for a control plane function, and mainly includes the RRC and a PDCP control plane PDCP-C. The PDCP-C is mainly responsible for one or more of encryption and decryption, integrity protection, data transmission, and the like of control plane data. The CU-UP is responsible for a user plane function, and mainly includes the SDAP and a PDCP user plane PDCP-U. The SDAP is mainly responsible for processing data of the core network and mapping a data flow (flow) to a bearer. The PDCP-U is mainly responsible for one or more of encryption and decryption, integrity protection, header compression, serial number maintenance, data transmission, and the like on a data plane. The CU-CP is connected to the CU-UP through an E1 interface. The CU-CP represents that the access network device is connected to the core network through an Ng interface. The CU-CP is connected to the DU through an F1-C (control plane). The CU-UP is connected to the DU through an F1-U (user plane). It may be understood that the access network device may be a CU node, a DU node, or a device including a CU node and a DU node. In addition, the CU may be classified as a device in a radio access network RAN, or the CU may be classified as a device in a core network CN. This is not limited herein.

The terminal may also be referred to as a terminal device, user equipment (user equipment, UE), an access terminal, a subscriber unit, a subscriber station, a mobile terminal (mobile terminal, MT), a mobile station (mobile station, MS), a remote station, a remote terminal, a mobile device, a user terminal, a wireless communication device, a user agent, or a user apparatus. The terminal is a device that provides a user with voice and/or data connectivity, and may be configured to connect people, things, and machines. The terminal in this embodiment of this application may be a mobile phone (mobile phone), a tablet computer (Pad), a computer with a wireless receiving/transmitting function, a wearable device, a mobile Internet device (mobile Internet device, MID), a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in this embodiment of this application. In this application, methods and steps that are implemented by the terminal may also be implemented by a means (for example, a chip or a circuit) of the terminal. In this application, the terminal and a means (for example, a chip or a circuit) that can be disposed in the terminal are collectively referred to as a terminal. Optionally, the terminal may also be configured to serve as a base station. For example, the terminal may serve as a scheduling entity that provides sidelink signals between terminals in V2X, D2D, or the like. For example, a cellular phone and a vehicle communicate with each other by using the sidelink signal. A cellular phone and a smart home device communicate with each other without relaying a communication signal through a base station.

The core network device is a device that is in a core network (core network, CN) and that provides service support for the terminal. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, user session setup. The UPF entity may be a user-plane function entity, and is mainly responsible for connecting to an external network. It should be noted that an entity in this application may also be referred to as a network element or a function entity. For example, the AMF entity may also be referred to as an AMF network element or an AMF function entity. For another example, the SMF entity may also be referred to as an SMF network element or an SMF function entity.

A network element management device is a device responsible for configuring and managing the access network device. Herein, the operation and management entity may be an OAM or a network management system. A manner of naming the operation and management entity is not limited in this embodiment of this application.

In the communication system 100, both the gNB 1 and the gNB 2 may communicate with a plurality of UEs. However, it should be understood that UE communicating with the gNB 1 and UE communicating with the gNB2 may be the same or may be different. UE 102 shown in FIG. 1 may communicate with both the gNB 1 and the gNB 2. However, this shows only a possible scenario. In some scenarios, the UE may communicate with only the gNB 1 or the gNB 2. This is not limited in this application. It should be understood that FIG. 1 is merely a simplified schematic diagram used as an example for ease of understanding. The communication system may further include another access network device, terminal, or core network device, which is not shown in FIG. 1. In NR and LTE systems, a radio resource control (radio resource control, RRC) status of UE includes a connected state (RRC_CONNECTED), an idle state (RRC_IDLE), and an inactive state (RRC_INACTIVE, or referred to as a third state). The RRC_INACTIVE (inactive) state is a state newly introduced when a terminal is connected to a 5G core network by using a gNB, and the state is between the connected state and the idle state. In the RRC_INACTIVE state, there is no RRC connection between the terminal and an access network device, but a connection between the access network device and a core network device is maintained, and the terminal stores all or some information required for establishing /resuming a connection. Therefore, in the RRC _INACTIVE state, when the terminal needs to establish a connection, the terminal can quickly establish or resume an RRC connection to a network device based on the stored related information.

When the UE is in the RRC_CONNECTED state, a link has been established between the UE and each of the gNB and the core network, and data can be directly transmitted to the UE when arriving at the network. When the UE is in the RRC _INACTIVE state, it indicates that a link has been established between the UE and each of the gNB and the core network before, but the link from the UE to the gNB is released. However, the gNB stores context of the UE, so that when data needs to be transmitted, the gNB can quickly resume the link. When the UE is in the RRC_IDLE state, there is no link between the UE and each of the gNB and the network. Therefore, when data needs to be transmitted, a link needs to be established between the UE and each of the gNB and the core network.

For example, FIG. 4 is a schematic diagram of RRC status transition according to an embodiment of this application. As shown in FIG. 4, in an RRC_IDLE state, UE may access a gNB station. In an access process or after accessing the gNB, the UE may perform an RRC setup process with the gNB, so that a status of the UE is switched from the RRC_IDLE state to an RRC_CONNECTED state. In the RRC_IDLE state, after the UE receives a paging message from the gNB or triggering is performed by a higher layer of the UE, the UE may initiate the RRC setup process, to attempt to establish an RRC connection to the gNB to enter the RRC_CONNECTED state. When the UE is in the RRC_IDLE state, there is no RRC connection between the UE and the gNB. When the UE is in the RRC_CONNECTED state, the gNB may use an RRC release process, for example, send an RRC release (RRC Release) message to the UE, to change the status of the UE from the RRC_CONNECTED state to the RRC_IDLE state or an RRC _INACTIVE state. When the UE is in the RRC _INACTIVE state, the UE may enter the RRC_IDLE state by releasing the RRC connection, or the UE may enter the RRC_CONNECTED state by resuming the RRC connection.

Mobility load balancing may include the following: A handover parameter of a cell is adjusted, so that some UEs in the RRC_CONNECTED state are handed over from a cell with a high load to a cell with a low load; and/or a reselection parameter of a cell is adjusted, so that some UEs in the RRC_IDLE state or the RRC_INACTICE state are reselected to a cell with a low load, to avoid a case that potential load imbalance is generated because the UE in the RRC_IDLE state or the RRC_INACTICE state initiates a service.

In an existing communication mechanism, for example, in LTE and NR, a handover parameter and a reselection parameter that are of a cell are adjusted mainly based on a load of the cell by sharing a resource usage status between network devices, to achieve an objective of mobility load balancing. In the conventional technology, interfaces between network devices, for example, an interface between an NR gNB and a core network, an interface between an LTE eNodeB and a core network, an interface between NR gNBs, an interface between LTE eNodeBs, an interface between a CU and a DU, and an interface between a CU-CP and a CU-UP, have a function of exchanging resource status information. A basic procedure of MLB is described below by using an interface such as an Xn interface between NR gNBs as an example.

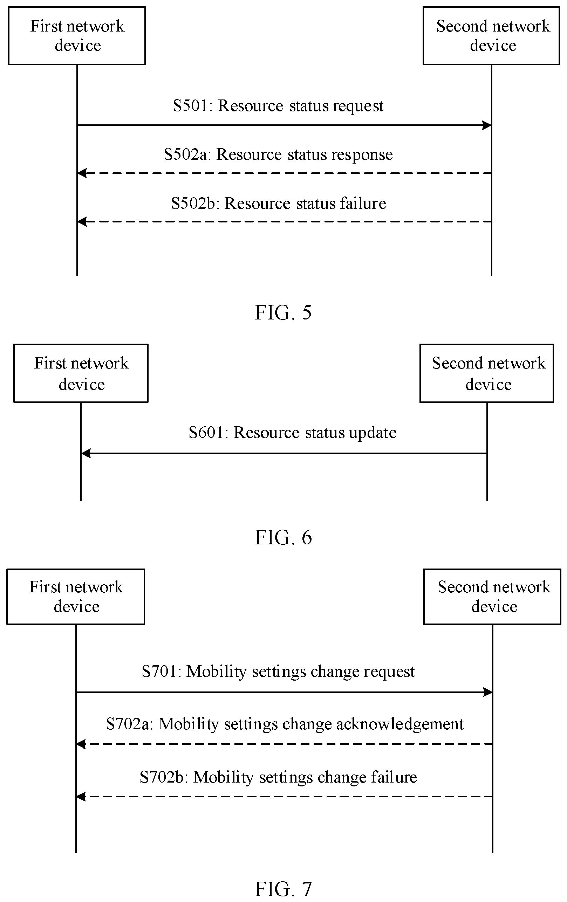

Resource usage status interaction between network devices may be controlled by using a resource status reporting initialization (resource status reporting initiation) procedure of MLB, as shown in FIG. 5.

S501: A first network device sends a resource status request to a second network device, where for example, the request is sent by using a resource status request (Resource Status Request) message.

Optionally, the resource status request indicates resource status-related information that needs to be fed back by the second network device.

Specifically, the first network device sends the resource status request message to the second network device, where the resource status request message carries information indicating information about a cell that the second network device starts to measure, information about a cell that the second network device stops measuring, and information about a cell added for measurement by the second network device, and the resource status-related information that needs to be fed back by the second network device may be indicated in a report characteristic (Report Characteristics) information element of the message.

The second network device performs a corresponding operation based on the resource status request message sent by the first network device.

If the corresponding operation can be successfully performed, for example, resource status information requested by the first network device can be successfully measured, S502a is performed; or if the corresponding operation cannot be successfully performed, for example, the resource status information requested by the first network device cannot be measured, S502b is performed.

S502a: Reply a response to the first network device, for example, make a response by using a resource status response (Resource Status Response) message.

S502b: Reply failure information to the first network device, for example, reply by using a resource status failure (Resource Status Failure) message. The failure information may include a failure cause, for example, a status of a specific resource cannot be measured.

After completing measurement of a resource requested by the first network device, the second network device may send a measurement result to the first network device by using a resource status reporting (Resource Status Reporting) procedure, as shown in FIG. 6.

S601: The second network device sends resource status information to the first network device, for example, sends the resource status information by using a resource status update (Resource Status Update) message.

The second network device periodically performs measurement based on a latest resource status request sent by the first network device, and after completing resource status measurement, sends the resource status update message to send the resource status information to the first network device by using the resource status update message.

After receiving the resource status update message from the second network device, if the first network device determines that mobility settings need to be changed, the first network device may perform negotiation and change by using a mobility settings change (Mobility Settings Change) procedure of MLB, as shown in FIG. 7.

S701: The first network device sends, to the second network device, information for requesting to change the mobility settings, for example, sends the information by using a mobility settings change request (Mobility Change Request) message.

That the first network device initiates a mobility settings change request may be triggered by a plurality of conditions. One of the trigger conditions is that after the first network device and the second network device share a resource usage status, it is determined that the mobility settings need to be adjusted. For example, the first network device finds that a load of the second network device is small, and therefore determines that a threshold for triggering a handover from the second network device to the first network device needs to be increased, so that it is more difficult for UE in the second network device to hand over to the first network device, and more UEs stay in the second network device.

It should be noted that a parameter in the mobility settings change procedure is specific to two neighboring cells, that is, a parameter of one specific cell to another specific cell.

If the second network device determines that a mobility settings change proposed by the first network device can be accepted, S702a is performed; or if the second network device determines not the mobility settings change proposed by the first network device cannot be accepted, S702b is performed.

S702a: The second network device replies a parameter change success response to the first network device, for example, makes a response by sending a mobility settings change success message (Mobility Change Acknowledge).

S702b: The second network device replies a parameter change failure response to the first network device, for example, makes a response by sending a mobility settings change failure (Mobility Change Failure) message. The parameter change failure response may include at least one of a failure cause and a mobility settings change range supported by the second network device.

Optionally, after receiving the mobility change failure message, the first network device may perform S701 based on the failure cause and the mobility settings change range supported by the second network device that are in the mobility settings change failure message, to re-initiate the mobility settings change procedure.

In the following, some terms in the embodiments of this application are explained and described to facilitate understanding by a person skilled in the art.

### I. Neural network

The neural network is a specific implementation form of machine learning. Machine learning (machine learning, ML) has attracted wide attention in academia and industry in recent years. Due to great advantages of machine learning in terms of structured information and massive data, many researchers in the communication field also turn attention to machine learning.

The neural network may be used to perform a classification task and a prediction task, and may also be used to establish a conditional probability distribution between variables. Common neural networks include a deep neural network (deep neural network, DNN), a generative neural network (generative neural network, GNN), and the like. Based on a network construction manner, the DNN may include a feedforward neural network (feedforward neural network, FNN), a convolutional neural network (convolutional neural network, CNN), and a recurrent neural network (recurrent neural network, RNN). The GNN includes a generative adversarial network (Generative Adversarial Network, GAN) and a variational autoencoder (Variational Autoencoder, VAE).

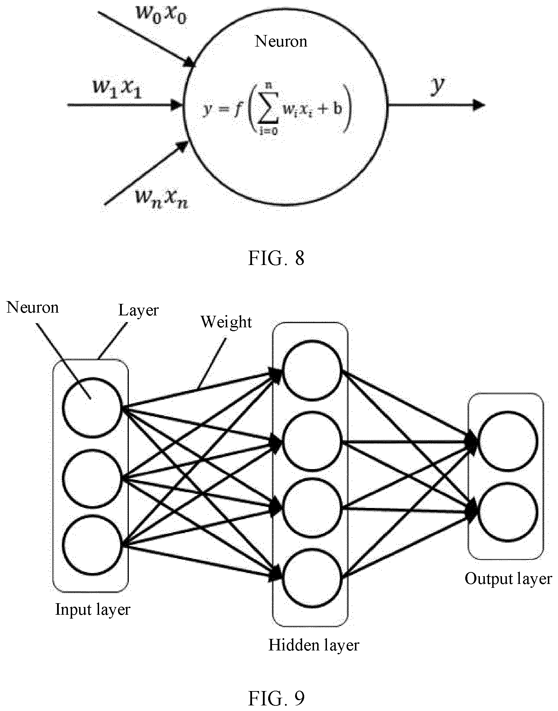

The neural network is constructed based on a neuron. The DNN is used as an example below to describe a calculation and optimization mechanism of the neural network. It may be understood that a specific implementation of the neural network is not limited in this embodiment of the present invention. In the DNN network, each neuron performs a weighted summation operation on an input value of the neuron, and outputs a weighted summation result through an activation function. FIG. 8 is a schematic diagram of a structure of a neuron. It is assumed that an input of the neuron is [*x*₀*, x*₁*, ..., xₙ*]*,* a weight corresponding to the input is [*w*₀, *w*₁, ..., *wₙ*], a bias of weighted summation is b, and forms of an activation function may be diversified, for example, the activation function is *f.* In this case, an output of execution of a neuron is: y, where *wᵢxᵢ* represents a product of wi and *xᵢ.* The DNN usually has a plurality of layers of structures, and each layer in the DNN may include a plurality of neurons. An input layer processes a received value by using the neuron, and then transfers a processed value to an intermediate hidden layer. Similarly, the hidden layer transfers a calculation result to a final output layer, to generate a final output of the DNN. FIG. 9 is a schematic diagram of a relationship between layers in a neural network. The DNN usually includes one or more hidden layers, and the hidden layer usually directly affects an information extraction capability and a function fitting capability. Increasing a quantity of hidden layers in the DNN or increasing a quantity of neurons at each layer can improve the function fitting capability of the DNN. A parameter of each neuron includes a weight, a bias, and an activation function. A set including parameters of all neurons in the DNN is referred to as a DNN parameter (or referred to as a neural network parameter). The weight and the bias of the neuron may be optimized by using a training process, so that the DNN has capabilities of extracting a data feature and expressing a mapping relationship.

Due to advantages of the neural network in terms of modeling and information feature extraction, a communication solution based on the neural network can be designed. To support different application scenarios and obtain a good result, a parameter of the neural network needs to be set and optimized. The parameter of the neural network includes information related to the neural network, for example, the parameter may include one or more of the following content:
a type of the neural network, for example, the deep neural network or the generative neural network;
information related to a neural network structure, for example, one or more of a quantity of layers in the neural network and a quantity of neurons; or
the parameter of each neuron in the neural network, for example, one or more of the weight, the bias, and the activation function.

### II. Network status information

The network status information is information related to a network resource usage status, and may include at least one of the following content: air interface resource status information, transport network layer resource status information, cell resource status information, hardware resource status information of a network device, a capacity resource usage status of each network slice of a network device, load information of different service types of a network device, or user path pre-determining.

The resource status information indicates a usage status of a resource, for example, one of a percentage of a used resource to a total amount, or a percentage of an unused resource in a total amount, and a total amount of the resource. The resource status information may further include a capacity level of the resource, that is, a gear of a total capacity of the resource. A range of a capacity value corresponding to the gear may be agreed in a protocol.

The air interface resource status information includes at least one of the following content:
at least one of usage statuses of a guaranteed bit rate (guaranteed bit rate, GBR) resource and a non-guaranteed bit rate (Non-GBR) resource in a cell;
at least one of usage statuses of a GBR resource and a non-GBR resource of a synchronization signal and physical broadcast channel block (synchronization signal and PBCH block, SSB, synchronization channel block for short) beam;
a usage status of a physical downlink control channel control channel element (physical downlink control channel control channel element, PDCCH CCE) resource in a cell;
a usage status of a sounding reference signal (sounding reference signal, SRS) resource in a cell;
a usage status of a physical random access channel (physical random access channel, PRACH) resource in a cell;
a usage status of a PRACH resource of an SSB beam;
a quantity of PDCCH CCEs occupied by am uplink and a downlink of a cell, or a total quantity of CCEs and information about an uplink occupation proportion and a downlink occupation proportion; or
code channel occupation proportions and resource block (resource block, RB) occupation proportions in different formats of a physical uplink control channel (physical uplink control channel, PUCCH) in a cell, where for example, a PUCCH format 1 has a code channel occupation proportion of 50% and occupies two RBs.

The transport network layer (transport network layer, TNL) resource status information may include:
a usage status of an uplink TNL resource and/or a usage status of a downlink TNL resource in a cell.

The cell resource status information may include at least one of the following content:
a capacity level of a cell and/or a capacity level of each SSB beam;
a capacity resource usage status of a cell and/or a capacity resource usage status of each SSB beam;
a quantity of activated users in a cell; or
a quantity of RRC connections in a cell.

The load information of different service types of the network device may include at least one of the following content:
service types of a cell, where the service types may be further classified based on quality of service (quality of service, QoS) of a service, for example, a service whose QoS is 1 corresponds to a first service type, and a service whose QoS is 2 corresponds to a second service type; or
load information of each service type of the cell, for example, a traffic value and/or a quantity of users that correspond/corresponds to the service type.

The user path pre-determining may include at least one of the following content:
location information of each user in a network device, for example, global positioning system (global positioning system, GPS) coordinates of the user;
reference signal received power (reference signal received power, RSRP) and reference signal received quality (reference signal received quality, RSRQ) measurement information of each user in the network device; or
user path information stored in the network device, for example, GPS coordinate information of each user.

In the foregoing content, the proportion of the used resource and/or the proportion of the unused resource each may be a specific value, or may be an index corresponding to a gear. For example, as shown in Table 1, an index-proportion comparison table is agreed in a protocol, where proportion information interval values correspond to indexes. For example, if the proportion of the used resource is "22%" and falls within an interval of [0%, 25%), an index value corresponding to the resource is "0".

**Table 1 Example of an index value-proportion comparison table**

| index value | proportion |
|---|---|
| 0 | [0%, 25%) |
| 1 | [25%, 50%) |
| 2 | [50%, 75%) |
| 3 | [75%, 100%] |

### III. Load value

The load value may represent a load status of a network device. Optionally, the load value may be a value obtained through calculation based on content in network status information. For example, the load value may be a value obtained by superposing values in the network status information by using corresponding weights.

In the foregoing method, an initial value of a used weight may be provided by an OAM, or may be a preset value, or may be set based on a configuration of the network device, and after an actual load value is obtained, iterative optimization may be performed on the weight based on a predicted value and an actual value.

In a possible implementation method, a calculation and optimization process of obtaining the load value based on the content in the network status information may be completed by using a neural network.

### IV. Actual value and predicted value

It should be noted that the actual value and the predicted value should correspond to time, for example, a predicted load value at first time means that time corresponding to the load value is the first time. The time corresponding to the actual value and the predicted value, that is, the first time, may be a time period or a time point.

The actual value includes actual network status information and an actual load value. The actual network status information is an actual value of network status information of a network device at corresponding time, and may be obtained through statistics collection and calculation by the network device. The actual load value is an actual value of a load value of the network device at corresponding time, and may be obtained through calculation based on actual network status information at the corresponding time. For a calculation method, refer to the foregoing load value obtaining method.

The predicted value includes predicted network status information and a predicted load value. The predicted network status information is a prediction result of network status information of the network device at corresponding time, and may be obtained based on current network status information in a possible implementation method. For example, predicted network status information at the first time is obtained based on a function of a correction value of the current network status information and network status information at at least one historical time corresponding to the first time. The function may be weighted summation. Specifically, for example, PDCCH CCE resource status information of a first network device from 10:00 to 11:00 is predicted. In a possible implementation method, Kalman filtering is performed on a proportion of a used PDCCH CCE resource of the first network device at current time and several proportion values that are of a used PDCCH CCE resource of the first network device and that are obtained by the first network device in one hour before the current time, to obtain a correction value, and obtain an actual PDCCH CCE occupation proportion value of the first network device from 10:00 to 11:00 every day in previous seven days, to obtain a historical value. The correction value and the historical value are superimposed based a corresponding weight, to obtain a prediction result of a proportion of a used PDCCH CCE resource of the first network device from 10:00 to 11:00. The predicted load value is a predicted result of a load value. In a possible implementation method, the predicted network status information may be first obtained based on the foregoing method by using the current network status information, and then the predicted load value is obtained by referring to the foregoing load value calculation method.

### V. MLB policy

The MLB policy is information that is related to a running policy of a network device and that is formulated for implementing MLB. The network device may adjust a parameter of the network device based on the MLB policy, so as to adjust a load of the network device to achieve load balancing. The MLB policy may include at least one of the following content:
a configuration parameter that is of the network device and that is used to adjust the load of the network device and time information corresponding to the parameter; or
reliability information of the MLB policy.

A parameter configuration in the MLB policy may be a configuration of a parameter, or may include configurations of a plurality of parameters, and a parameter range may be determined based on a requirement for adjusting the load of the network device. The parameter may be used to adjust the load of the network device. For example, the parameter may be a handover-related parameter or an access-related parameter. For a specific parameter, refer to a parameter in the conventional technology or a parameter that appears in the future. This is not limited in the embodiments.

The configuration parameter of the network device may include configuration parameters of one or more network devices. This is not limited herein. Parameter configurations of different network devices and time information corresponding to the parameters may be independent of each other, or may be associated with each other. For example, different network devices may use independent time information corresponding to a parameter, so as to control the parameters of the network devices more flexibly; or different network devices may share time corresponding to the parameter, so as to reduce information exchange overheads. This is not limited in the method embodiments.

The parameter configuration and the time information in the MLB policy may be implemented in the following possible implementations. It should be noted that in the implementations, a first network device is used as an example to describe an implementation method of the parameter configuration and the time information. When a plurality of network devices are related, processing methods of different network devices are the same.

In a possible implementation, the MLB policy includes a first parameter of the first network device, and includes valid time of the first parameter, which may be referred to as first valid time. In the first valid time, the first network device performs parameter configuration based on the first parameter, and may trigger an MLB policy inference service of the first network device before or after the first valid time ends, to obtain a new parameter.

In another possible implementation, the MLB policy includes a plurality of parameter configurations of the first network device and a plurality of pieces of time information corresponding to the parameter configurations, that is, a plurality of groups of parameter configurations and time information. For example, the MLB policy includes a first parameter of the first network device and valid time of the first parameter, which may be referred to as first valid time; and further includes a second parameter of the first network device and valid time of the second parameter, which may be referred to as second valid time. In this case, the first network device uses the first parameter in the first valid time; after the first valid time ends, the first network device uses the second parameter in the second valid time; and triggers an MLB policy inference service of the first network device before or after the second valid time ends, to obtain a new parameter. In addition, if the MLB policy inference service is a periodic service, a cut-off moment of the second valid time may also be considered as a cut-off moment of a current periodicity by default. According to the foregoing method, the parameter of the network device can be dynamically adjusted.

Reliability represents credibility of the MLB policy. In a possible implementation, the credibility is represented by a probability that a predicted load value and an actual load value fall within a predicted load value error range. For example, the reliability is represented as follows: The predicted load value error range is -1 to 1, and a probability that a deviation between the predicted load value and the actual load value fall within the error range is 95%. Alternatively, the reliability includes probability distribution of a predicted load value in a specific interval. For example, the probability distribution predicts probabilities of a load value in different intervals. Table 2 includes a correspondence between a predicted load value interval and a probability.

**Table 2 Predicted load value-probability distribution table**

| predicted load value interval | probability |
|---|---|
| [0, 1) | 0.2 |
| [1, 2) | 0.5 |
| [2, 3] | 0.3 |

In the conventional technology, an MLB mechanism is mainly to periodically obtain a current network resource usage status to determine whether a parameter configuration of a base station needs to be adjusted. However, in an existing MLB mechanism, because an actual network condition is complex and may fluctuate, an MLB policy formulated by using the existing MLB mechanism only adjusts the parameter configuration periodically, and the parameter configuration cannot be changed between two adjustment periodicities, which may cause load imbalance and cannot make full use of network resources.

To resolve the foregoing problem, the embodiments of this application provide a communication method, specifically, a load balancing method. The method may include: obtaining first network status information of a first network device; obtaining information indicating a network status of a second network device; obtaining a to-be-effective first mobility load balancing MLB policy based on the first network status information and the information indicating a network status of the second network device; and sending the first MLB policy to the second network device. The first MLB policy includes at least one of the following content: a configuration parameter used to adjust a load of the first network device and time information corresponding to the configuration parameter used to adjust the load of the first network device, a configuration parameter used to adjust a load of the second network device and time information corresponding to the configuration parameter used to adjust the load of the second network device, or reliability information of the first MLB policy. The first network device and/or the second network device may adjust a parameter configuration based on the time information, so that parameter configuration flexibility is enhanced, and MLB performance is improved. The first network device and/or the second network device may accept or refuse, based on the reliability information, to adjust a parameter configuration based on the first MLB policy, so that MLB performance can be improved.

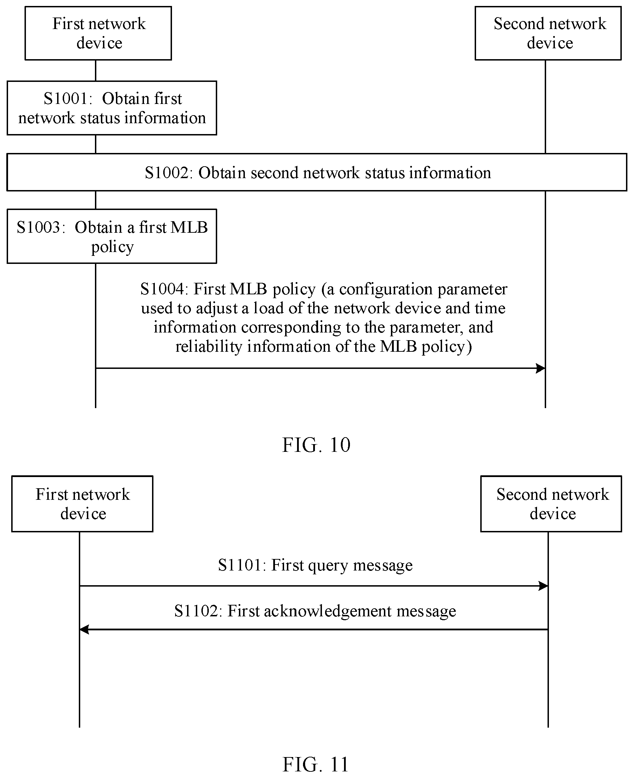

FIG. 10 provides a flowchart of a possible implementation. A method in this embodiment includes the following steps.

S1001: A first network device obtains first network status information of the first network device.

The first network device starts an MLB procedure to obtain the first network status information of the first network device. The MLB procedure may be triggered periodically, or may be triggered by an event. For example, when a quantity of users exceeds a threshold, the MLB procedure is started.

S1002: The first network device obtains information indicating a network status of a second network device.

The information indicating a network status of the second network device may include current network status information of the second network device, network status information predicted by the second network device, or a third predicted load value of the second network device. For example, as shown in FIG. 11, a possible manner of obtaining the information indicating a network status of the second network device may include the following steps.

S1101: The first network device sends, to the second network device, request information for requesting, by the first network device, second network status information of the second network device, for example, sends the request information by using a first query message.

Specifically, the first network device sends the first query message to the second network device, where the first query message includes the request information for requesting, by the first network device, the second network status information of the second network device.

After receiving the first query message, the second network device collects statistics about network status information of the second network device based on the request information of the second network status information in the first query message.

S1102: The second network device sends a first acknowledgement message to the first network device.

After completing collection of the statistics about the network status information, the second network device sends, to the first network device, information indicating a network status.

The information indicating a network status is current network status information of the second network device.

Alternatively, the information indicating a network status is predicted network status information that is of the second network device at third time in a current MLB policy and that is obtained by the second network device based on current network status information of the second network device.

Alternatively, the information indicating a network status is a predicted load value that is of the second network device at third time in a current MLB policy and that is obtained by the second network device based on current network status information of the second network device. The third time is specific time in current time and first time.

S1003: The first network device obtains a to-be-effective first MLB policy based on the first network status information and the information indicating a network status of the second network device. The first MLB policy corresponds to the first time.

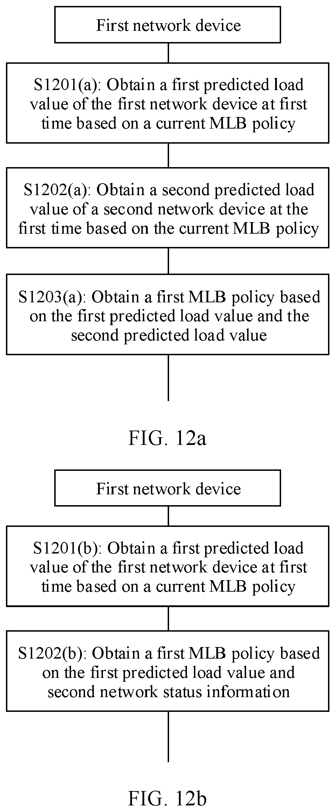

Specifically, as shown in FIG. 12a to FIG. 12c, the to-be-effective first MLB policy may be obtained in the following possible implementations.

In a possible implementation, as shown in FIG. 12a, the first network device obtains the first MLB policy based on a predicted load value of the first network device and the information indicating a network status of the second network device. The implementation includes the following steps.

S1201(a): The first network device obtains a first predicted load value of the first network device at the first time based on a current MLB policy, the first network status information, and the information indicating a network status of the second network device.

Optionally, the first predicted load value of the first network device at the first time may be obtained by using a first neural network. For example, the current MLB policy, the first network status information, and the second network status information are used as inputs of the first neural network, and the first predicted load value of the first network device at the first time is used as an output of the first neural network.

S1202(a): The first network device obtains a second predicted load value of the second network device at the first time based on the current MLB policy, the first network status information, and the information indicating a network status of the second network device.

Optionally, the second predicted load value of the second network device at the first time may be obtained by using the first neural network. For example, the current MLB policy, the first network status information, and the second network status information are used as inputs of the first neural network, and the second predicted load value of the second network device at the first time is used as an output of the first neural network.

S1203(a): The first network device obtains the first MLB policy based on the first predicted load value and the second predicted load value. Optionally, the first MLB policy may be obtained by using a second neural network. For example, the first predicted load value and the second predicted load value are used as inputs of the second neural network, and the first MLB policy is used as an output of the second neural network.

In this embodiment, an example in which a predicted load value or an MLB policy is obtained by using a neural network is used for description subsequently. It may be understood that the predicted load value or the MLB policy may alternatively be obtained in another manner, for example, the predicted load value or the MLB policy is obtained by using a preset fixed calculation method or condition. This is not limited herein.

In another possible implementation, as shown in FIG. 12b, the first network device obtains the first MLB policy based on a predicted load value of the first network device and the network status information of the second network device. The implementation includes the following steps.

S1201(b): The first network device obtains a first predicted load value of the first network device at the first time by using a first neural network and based on a current MLB policy, the first network status information, and the information indicating a network status of the second network device.

S1202(b): The first network device obtains the first MLB policy by using a second neural network and based on the first predicted load value and the information indicating a network status of the second network device.

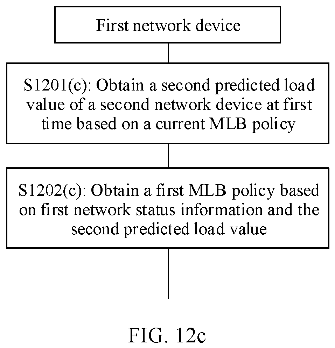

In another possible implementation, as shown in FIG. 12c, the first network device obtains the first MLB policy based on the network status information of the first network device and a predicted load value of the second network device. The implementation includes the following steps.

S1201(c): The first network device obtains a second predicted load value of the second network device at the first time by using a first neural network and based on a current MLB policy, the first network status information, and the information indicating a network status of the second network device.

S1202(c): The first network device obtains the first MLB policy based on the first network status information and the second predicted load value by using a second neural network.

In the embodiments shown in FIG. 12a to FIG. 12c, the first neural network and the second neural network may be neural networks independent of each other, or may be a same neural network.

S1004: The first network device sends the first MLB policy to the second network device.

The first network device sends the first MLB policy to the second network device through an interface between the first network device and the second network device. The first MLB policy may include at least one of the following content: a configuration parameter used to adjust a load of the first network device and time information corresponding to the configuration parameter used to adjust the load of the first network device, a configuration parameter used to adjust a load of the second network device and time information corresponding to the configuration parameter used to adjust the load of the second network device, or reliability information of the first MLB policy.

The second network device may obtain configuration-related information of the first network device from the first MLB policy, and use the configuration-related information as a reference in a subsequent running process to formulate a running policy. For example, when formulating an MLB policy, the second network device may use a configuration status of the first network device as input information, to obtain impact of a parameter change of the second network device on a load.

In the foregoing embodiment, a load status is predicted by using a neural network, and a predicted load result is used as input information of the neural network to infer an MLB policy, where the MLB policy includes effective time information, so that a parameter configuration in the MLB policy is flexibly controlled, and performance of the MLB policy achieved when a network load changes can be improved. Alternatively, the first network device and/or the second network device may accept or refuse, based on the reliability information, to adjust a parameter configuration based on the first MLB policy, so that MLB performance can be improved.

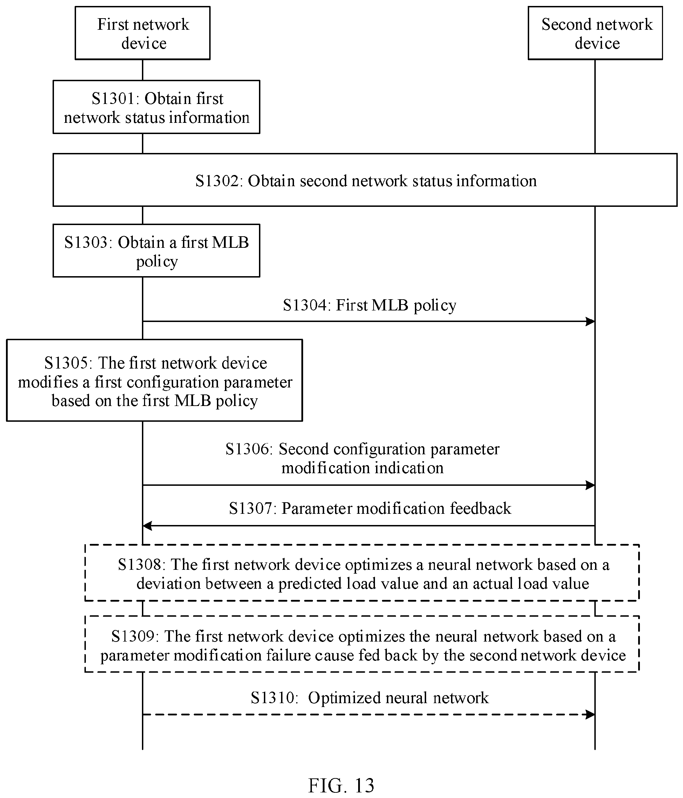

In addition, in an embodiment of this application, a neural network may further be optimized based on an actual load value, so as to continuously improve performance of an MLB policy. As shown in FIG. 13, the embodiment includes the following steps.

S1301: A first network device obtains first network status information.

S1302: The first network device obtains second network status information.

S1303: The first network device obtains a first MLB policy based on the first network status information and the second network status information.

S1304: The first network device sends the first MLB policy to a second network device.

S1301 to S1304 are the same as S1001 to S1004, and details are not described herein again.

S1305: The first network device modifies a first configuration parameter based on the first MLB policy.

S1306: The first network device indicates, based on the first MLB policy, the second network device to modify a second configuration parameter.

The first network device may indicate, by using a parameter modification indication sent to the second network device, the second network device to modify the second configuration parameter. The parameter modification indication may be agreed in a protocol, and is one of a specific value of a parameter, an adjustment amount of parameter modification, or a gear of parameter modification. For example, a current value of a parameter is 10, and the parameter is expected to be modified to 15. In a possible implementation, a specific value 15 of the parameter is sent as the parameter modification indication, and the second network device modifies the parameter to 15 after receiving the parameter modification indication. In a possible implementation, an adjustment amount 5 of parameter modification is sent, and after receiving the adjustment amount, the second network device adjusts the parameter by 5 based on the existing value 10, to modify the parameter to 15. In a possible implementation, it is agreed in the protocol that an adjustment amount corresponding to each adjustment gear is 5, and an adjustment gear 1 is sent. After receiving the adjustment gear 1, the second network device determines, based on the adjustment gear 1, that the adjustment amount is 5, and modifies the parameter to 15.

The parameter modification indication may be sent in the following possible implementations.

In a possible implementation, the first network device sends the parameter modification indication to the second network device by using the first MLB policy sent by the first network device in S1304. The parameter modification indication is a parameter configuration and time information in the first MLB policy that are related to the second network device. After receiving the first MLB policy, the second network device performs corresponding parameter modification.

In a possible implementation, the first network device sends the parameter modification indication to the second network device by using independent indication information. For example, information indicating to modify the second configuration parameter may be a mobility change request message in an existing MLB mechanism. After receiving the mobility change request message, the second network device performs corresponding parameter modification.

S1307: The second network device feeds back a parameter modification result.

If the parameter is successfully modified, optionally, the second network device feeds back a parameter modification success message to the first network device, for example, feeds back the parameter modification success message by using a mobility change acknowledge message in the existing MLB mechanism; and S1308 is performed.

If the second network device fails to modify the second parameter configuration, the second network device feeds back a parameter modification failure message to the first network device, and S1309 is performed.

The parameter modification failure message may carry a parameter modification failure cause indication. For example, parameter modification exceeds a parameter configuration range of the second network device, or the second network device refuses to modify the second parameter configuration, for example, the second network device determines, based on the reliability information, to refuse to modify the parameter. For example, the modification failure indication message may be a mobility change failure message in the existing MLB mechanism.

Optionally, the parameter modification failure message may further carry a parameter modification range acceptable to the second network device. In a possible implementation, the parameter modification range includes a minimum value and/or a maximum value of a parameter. In a possible implementation, the parameter modification range includes a current parameter value of the second network device and a currently acceptable parameter adjustment value or gear. For example, a parameter handover range of the second network device is from 0 to 20. The feedback message carries a current value 15 of a handover parameter and a currently acceptable parameter adjustment range from -15 to 5.

Optionally, the parameter modification failure message may further carry reliability information that is of an MLB policy and that is that acceptable to the second network device. For example, in a possible implementation, the second network device may feed back that an MLB policy whose reliability probability value is 95% or higher is accepted.

S1308: The first network device optimizes a first neural network and/or a second neural network based on a predicted value and an actual value.

It may be understood that the predicted value and the actual value include predicted network status information and/or a predicted load value, and the actual value includes actual network status information and/or an actual load value. This is not limited. The first network device may optimize the first neural network and/or the second neural network based on the predicted network status information and the actual network status information, or may optimize the first neural network and/or the second neural network based on the predicted load value and the actual load value. For example, the first neural network and/or the second neural network are/is optimized based on the predicted load value and the actual load value, and the following possible implementations are included.

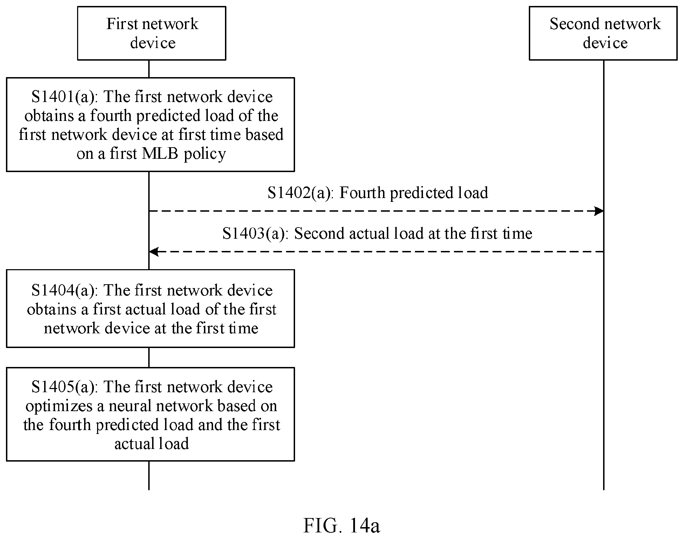

In a possible implementation, the first network device optimizes the first neural network and/or the second neural network of the first network device based on a predicted load value and an actual load value that are of the first network device. As shown in FIG. 14a, the implementation may include the following steps.

S1401(a): The first network device obtains a fourth predicted load value of the first network device at first time.

The first network device predicts a load value of the first network device at the first time based on the first MLB policy by using the first neural network, to obtain the fourth predicted load value.

S1402(a): Optionally, the first network device sends the fourth predicted load value to the second network device.

After receiving the fourth predicted load value, the second network device may determine a running policy of the second network device based on the fourth predicted load value. For example, the second network device may determine, based on the fourth predicted load value, whether the second network device needs to be triggered to adjust the MLB policy.

S1403(a): Optionally, the second network device sends a second actual load of the second network device at the first time to the first network device.

S1404(a): The first network device obtains a first actual load value of the first network device at the first time.

S1405(a): The first network device optimizes the first neural network and/or the second neural network based on the fourth predicted load value and the first actual load value.

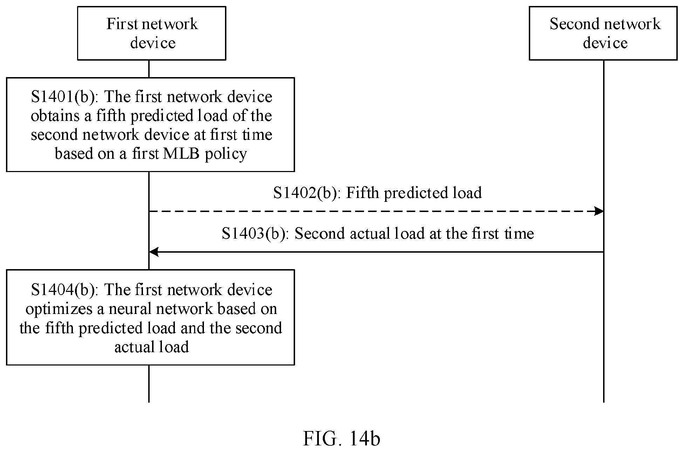

In a possible implementation, the first network device optimizes a neural network based on a load prediction result of the second network device and an actual load result of the second network device. As shown in FIG. 14b, the implementation includes the following steps.

S1401(b): The first network device obtains a fifth predicted load value of the second network device at first time.

The first network device predicts a load of the second network device at the first time based on the first MLB policy by using the first neural network, to obtain the fifth predicted load value.

S1402(b): Optionally, the first network device sends the fifth predicted load value to the second network device.

After receiving the fifth predicted load value, the second network device may determine a running policy of the second network device based on the fifth predicted load value. For example, the second network device may determine, based on the fifth predicted load value, whether the second network device needs to be triggered to adjust the MLB policy.

S1403(b): The second network device sends a second actual load value of the second network device at the first time to the first network device.

S1404(b): The first network device optimizes the first neural network and/or the second neural network based on the fifth predicted load value and the second actual load value.

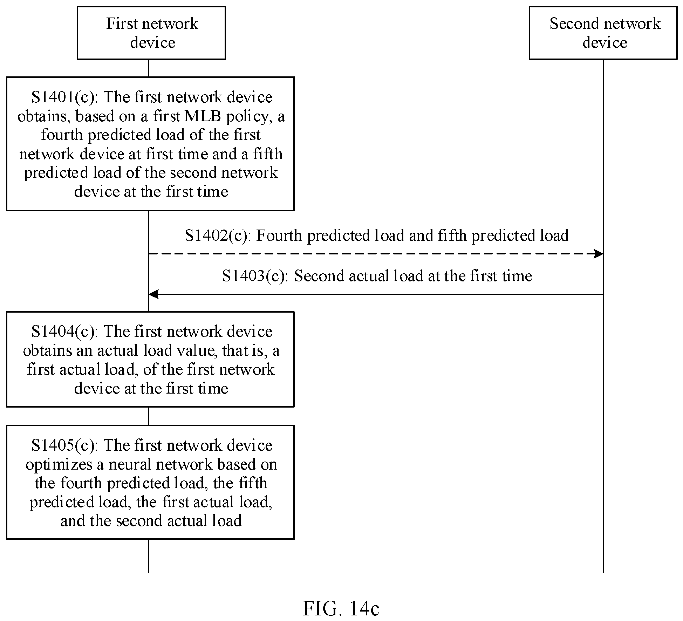

In a possible implementation, the first network device optimizes a neural network based on load prediction results of the first network device and the second network device, and actual load results of the first network device and the second network device. As shown in FIG. 14c, the implementation includes the following steps.

S1401(c): The first network device obtains a fourth predicted load value of the first network device at first time and a fifth predicted load value of the second network device at the first time.

The first network device predicts, based on the first MLB policy by using the first neural network, a load of the first network device at the first time to obtain the fourth predicted load value; and predicts, based on the first MLB policy by using the first neural network, a load of the second network device at the first time to obtain the fifth predicted load value.

S1402(c): Optionally, the first network device sends the fourth predicted load value and/or the fifth predicted load value to the second network device.

For details, refer to related content in S1402(a) and S1402(b). Details are not described herein again.

S1403(c): The second network device sends a second actual load value of the second network device at the first time to the first network device.

S1404(c): The first network device obtains a first actual load value of the first network device at the first time.

S1405(c): The first network device optimizes the first neural network and/or the second neural network based on the fourth predicted load value, the fifth predicted load value, the first actual load value, and the second actual load value.

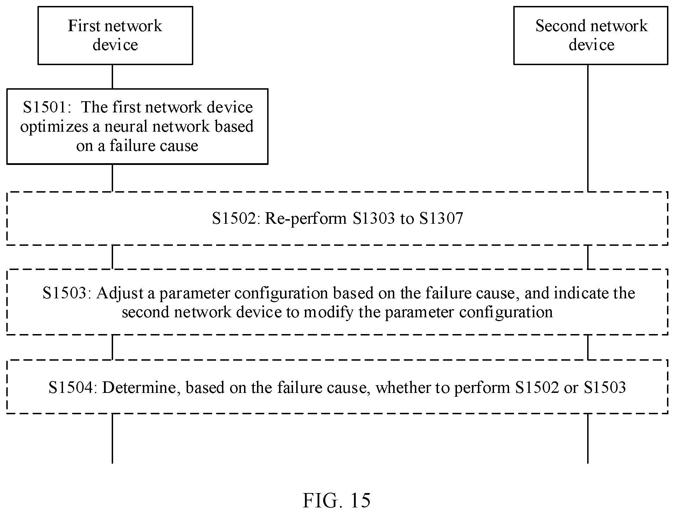

In S1309, if parameter modification of the second network device fails, a neural network is optimized based on a failure cause replied by the second network device. Specifically, as shown in FIG. 15, that a neural network is optimized based on a failure cause replied by the second network device may include the following steps.

S1501: The first network device optimizes the first neural network and/or the second neural network based on the cause fed back by the second network device.

For example, the first network device adjusts a parameter range in an inference process based on a parameter modification range in the failure cause that is fed back. In this way, the neural network is optimized, so that an inferred MLB policy can meet an actual network requirement to a larger extent, thereby avoiding a failure in subsequent execution of the MLB policy.

Optionally, one of S1502, S1503, and S1504 is performed.

S1502: Re-perform S1303 to S1307 again.

If parameter modification fails, and the neural network is optimized based on the failure cause, an MLB policy is re-inferred.

In a possible implementation, if the failure cause is that parameter modification exceeds the parameter configuration range of the second network device, the first network device re-predicts a load and infers an MLB policy. If an implementable MLB policy can be obtained in the parameter configuration range of the second network device, a parameter of the first network device and/or a parameter of the second network device are/is re-adjusted, and performs optimization based on a new MLB policy.

In a possible implementation, if the failure cause is that the second network device determines, based on the reliability information, to refuse to modify a parameter, the first network device re-predicts a load and infers an MLB policy based on a credibility requirement of the second network device, re-adjusts a parameter of the first network device and/or a parameter of the second network device, and performs optimization based on a predicted load value and an actual load value in a new MLB policy according to the embodiments shown in FIG. 14a to FIG. 14c.

S1503: Adjust a parameter configuration based on the failure cause in the failure feedback, and indicate the second network device to modify the parameter configuration.

If the failure cause is that the parameter modification indication exceeds the parameter modification range allowed by the second network device, the second parameter configuration value may be adjusted based on a parameter modification range in the failure feedback message, and the second network device is indicated to modify the second parameter configuration.

S1504: Determine, based on the failure cause in the failure feedback, whether to perform S1502 or S1503.

It is determined, based on the failure cause fed back by the second network device, whether to re-infer an MLB policy or directly modify a parameter.

In a possible implementation method, when the failure cause is that the parameter modification indication exceeds a parameter range allowed by the second network device, and a deviation between the parameter modification indication and a parameter range allowed by the second network device exceeds a specified threshold, S1502 is performed, that is, re-inferring is performed; or if the deviation between the parameter modification indication and the parameter range allowed by the second network device is less than the threshold, S1503 is performed, that is, an MLB policy is no longer re-inferred, and the parameter modification indication is adjusted based on a parameter range that is fed back. In a possible implementation method, the specified threshold may be set based on experience of sensitivity of a load to a parameter change. For example, when it is considered that a configured value used to trigger sending of a handover-related measurement report has a large impact on a handover, a threshold corresponding to the parameter should be set to a small value, so as to avoid a large impact on the load caused by parameter adjustment.

S1310: Optionally, the first network device sends a neural network optimization message to the second network device.

After completing optimization of a neural network, the first network device may feed back the neural network optimization message to the second network device, to provide information for neural network optimization by the second network device. The optimization message may include at least one of the following content:
an actual load value of the first network device at the first time; and
a parameter of a neural network obtained through optimization by the first network device, for example, a weight parameter or an input parameter of the neural network.

In the foregoing embodiment, a neural network may be optimized by using a deviation between a predicted load value and an actual load value, to further improve load prediction accuracy and MLB policy prediction accuracy.

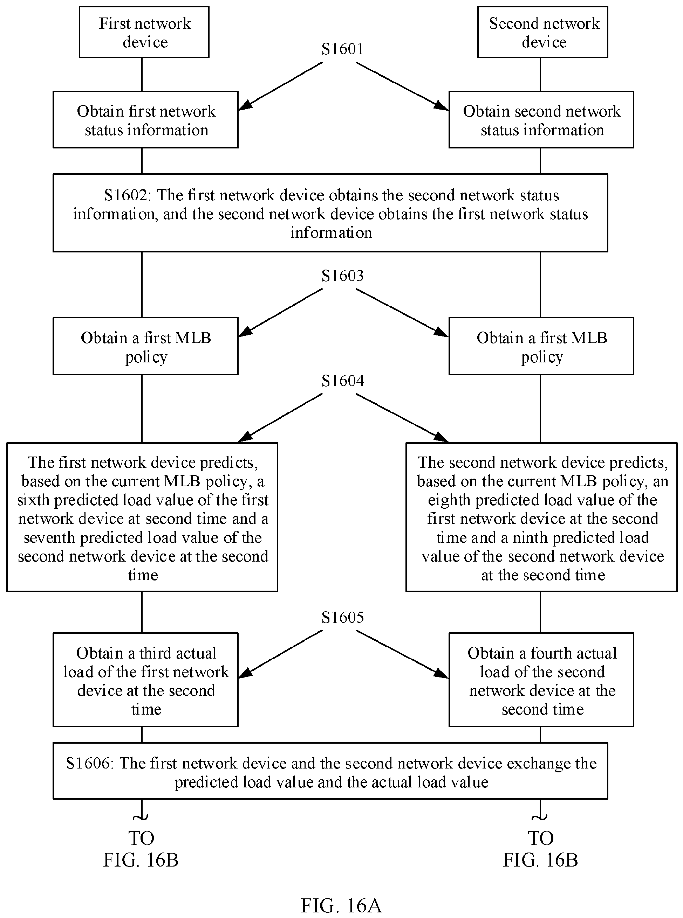

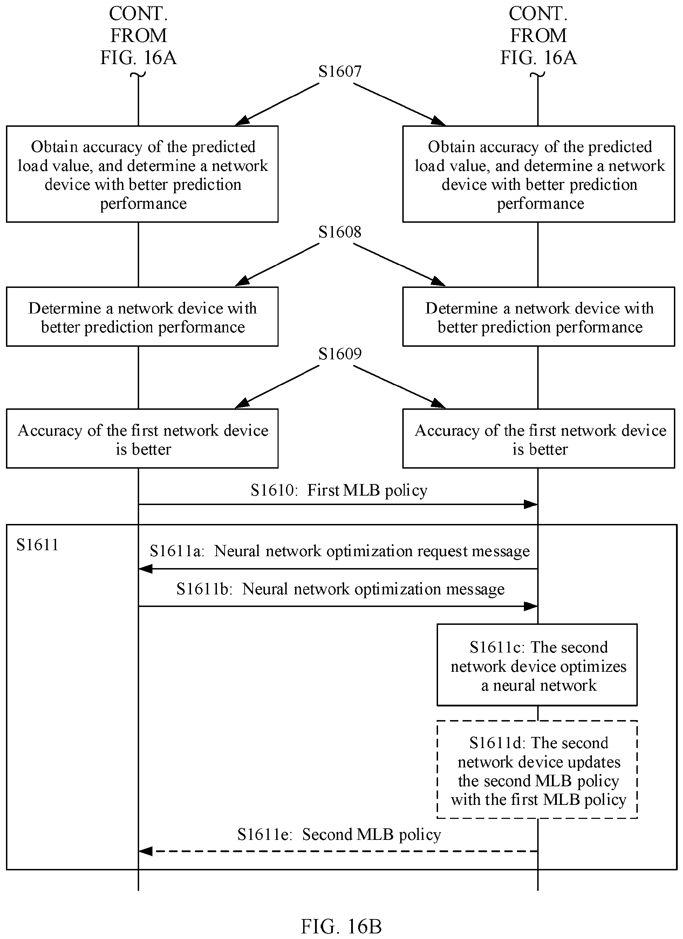

When a plurality of devices in a network support load prediction and MLB policy inference services, a neural network may alternatively be optimized based on inference results of the plurality of network devices. An embodiment of this application further provides a method for optimizing a neural network based on inference results of a plurality of network devices. As shown in FIG. 16A and FIG. 16B, the method may include the following steps.

S1601: A first network device obtains first network status information, and a second network device obtains information indicating a network status of the second network device.

The first network status information and the information indicating a network status of the second network device are the same as those described in S1001. Details are not described herein again.

S1602: The first network device obtains the second network status information, and the second network device obtains the information indicating a network status of the first network device.

The first network device sends a first query message to the second network device, and receives a first acknowledgement message sent by the second network device. The second network device sends a second query message to the first network device, and receives a second acknowledgement message sent by the first network device.

For content of the first query message, the first acknowledgement message, the second query message, and the second acknowledgement message, refer to content related to the query message and the acknowledgement message in S1001 and S1002.

The second query message and the first acknowledgement message may be a same message, or the second query message and the first acknowledgement message are two independent messages. The two messages may be set at same time or at different same.

It should be noted that the information, carried in the second acknowledgement message, that is of the first network device and that indicates a network status is one of current network status information of the first network device, network status information predicted by the first network device, or a predicted load value.

S1603: The first network device obtains a first MLB policy, and the second network device obtains a second MLB policy.

For details, refer to content described in S1003, and details are not described herein again.

S1604: The first network device predicts, based on a current MLB policy, a sixth predicted load value of the first network device at second time and a seventh predicted load value of the second network device at the second time; and the second network device predicts, based on the current MLB policy, an eighth predicted load value of the first network device at the second time and a ninth predicted load value of the second network device at the second time.

In a possible implementation method, the sixth predicted load value, the seventh predicted load value, the eighth predicted load value, and the ninth predicted load value may also be predicted load values at different time points or in different time periods, so that randomness of the predicted load values is improved, to prevent network fluctuation from affecting subsequent accuracy calculation.

S1605: The first network device obtains a third actual load value at the second time, and the second network device obtains a fourth actual load value at the second time.

In a possible implementation method, if the sixth predicted load value, the seventh predicted load value, the eighth predicted load value, and the ninth predicted load value correspond to different time, the first network device and the second network device may also obtain corresponding actual load values based on the time of the predicted load values, so that the predicted load values can be compared with the actual load values.

S1606: The first network device and the second network device exchange the predicted load value and the actual load value.

The first network device and the second network device exchange the predicted load value and the actual load value, to provide information for subsequent accuracy calculation.

In a possible implementation method, the first network device performs one of the following content:
sending the sixth predicted load value, the seventh predicted load value, and the third actual load to the second network device;
sending the sixth predicted load value and the third actual load to the second network device;
sending the seventh predicted load value and the third actual load to the second network device; and
sending the seventh predicted load value to the second network device;

The second network device performs one of the following content:
sending the eighth predicted load value, the ninth predicted load value, and the fourth actual load to the first network device;
sending the ninth predicted load value and the fourth actual load to the first network device;
sending the eighth predicted load value and the fourth actual load to the first network device; and
sending the eighth predicted load value to the first network device.

S1607: The first network device and the second network device obtain accuracy of the predicted load value, and determine a network device with better prediction performance.

The first network device and the second network device perform at least one of the following content:
calculating accuracy of the sixth predicted load value based on the third actual load value and the sixth predicted load value; and
calculating accuracy of the seventh predicted load value based on the fourth actual load value and the seventh predicted load value.

In addition/alternatively, the first network device and the second network device perform at least one of the following content:
calculating accuracy of the eighth predicted load value based on the third actual load value and the eighth predicted load value; and
calculating accuracy of the ninth predicted load value based on the fourth actual load value and the ninth predicted load value.

The accuracy is a value used to describe a deviation between the predicted load value and the actual load value, and is a function of the predicted load value and the actual load value. In a possible implementation method, the accuracy may be calculated by using the following formula$accuracy = \left(\left|predicted load-actual load\right|\right) / actual load$

A smaller accuracy value obtained through calculation by using the foregoing formula indicates that the predicted load value is closer to the actual load value, and the accuracy is better.

S1608: The first network device and the second network device determine a network device with better prediction performance.

The first network device and the second network device determine, based on at least one of the obtained accuracy of the sixth predicted load value and the obtained accuracy of the seventh predicted load value, and at least one of the obtained accuracy of the eighth predicted load value and the obtained accuracy of the ninth predicted load value, a network device with better prediction performance.

If the accuracy of the sixth predicted load value or the accuracy of the seventh predicted load value is better, prediction performance of the first network device is better; or if the accuracy of the eighth predicted load value or the accuracy of the ninth predicted load value is better, prediction performance of the second network device is better.

It should be noted that, in another possible implementation method, the first network device and the second network device may directly exchange accuracy of the obtained predicted load value, instead of exchanging the obtained predicted load value. For example, the first network device may calculate the accuracy of the sixth predicted load value based on the sixth predicted load value and the third actual load value, and send the accuracy of the sixth predicted load value to the second network device. The second network device may calculate the accuracy of the ninth predicted load value based on the ninth predicted load value and the fourth actual load value, and send the accuracy of the ninth predicted load value to the first network device. In this way, the first network device and the second network device may determine, based on the accuracy of the sixth predicted load value and the accuracy of the ninth predicted load value, a network device with better prediction performance. The foregoing method may replace content performed by the first network device and the second network device in S1606 and S1607, so as to reduce operation overheads of the network device and information exchange overheads.

S1609: For example, both the first network device and the second network device determine that accuracy of the first network device is better.

The first network device determines that the accuracy of the first network device is better. When a network device determines that prediction performance of the network device is better, S1610 is performed. When the second network device determines that the accuracy of the first network device is better, that is, when a network device determines that accuracy of another network device is better, S1611 is performed.

S1610: The first network device sends the first MLB policy to the second network device.

If the first network device determines that the accuracy of the first network device is better, the first network device sends the first MLB policy to the second network device.

Subsequently, the first network device may perform parameter modification and/or neural network optimization with reference to the reference embodiment shown in FIG. 13.

S1611: The second network device determines that accuracy of another network device is better, and optimizes a neural network, which may specifically include the following steps.

S1611a: The second network device sends information for requesting neural network optimization information to the first network device.

S1611b: The first network device feeds back the neural network optimization information to the second network device.

After receiving the message for requesting the neural network optimization information, the first network device feeds back the neural network optimization information, where the neural network optimization information includes at least one of the following content:
a parameter of a first neural network and/or a parameter of a second neural network of the first network device;
an analysis result that is specific to a deviation between a predicted load value and an actual load value and that is recorded in the first network device, for example, an input amount that causes a low or high predicted load value, and neural network parameter information related to the input amount; or
input information used by the first neural network and/or the second neural network of the first network device to obtain a predicted load value and the first MLB policy, for example, one or more of the first network status information, the information indicating a network status of the second network device, and an MLB policy.

S1611c: The second network device optimizes a first neural network and/or a second neural network based on the neural network optimization information.

Optimization of a neural network depends on internal implementation of a product. For example, there are the following possible implementations.

In a possible implementation method, the second network device may update the first neural network and/or the second neural network of the second network device based on the parameter of the first neural network of the first network device and/or the parameter of the second neural network of the first network device that are sent by the first network device.

In a possible implementation, the second network device may determine, based on the analysis result that is specific to the deviation between the predicted load value and the actual load and that is sent by the first network device, an input amount that has a large impact on the deviation, and adjust a corresponding neural network parameter of the input amount.

S1611d: Optionally, the second network device updates the second MLB policy with the first MLB policy.

If the second network device determines that accuracy of the second network device is not optimal, the second network device may use an MLB policy of a network device with better accuracy. The second network device may alternatively determine, based on another condition, for example, the MLB policy of the network device with better accuracy exceeds a range allowed by the second network device, to use an MLB policy inferred by the second network device.

S1611e: Optionally, the second network device sends the second MLB policy to the first network device.

In a possible implementation method, because the accuracy of the second network device is not optimal, it may be considered by default that the second network device does not send the second MLB policy to the first network device.

In another possible implementation, the second network device may send the second MLB policy to the first network device. After receiving the second MLB policy from the second network device, the first network device may determine, based on the second MLB policy, the MLB policy performed by the second network device and a parameter of the second network device, and determine whether to modify a parameter of the first network device.

Subsequently, the second network device may perform parameter modification and optimization with reference to the embodiment shown in FIG. 13. Details are not described herein again.

According to the method in the foregoing embodiment, when a plurality of network devices can support load value prediction and MLB policy inference functions, the network device may optimize a neural network of the network device based on a neural network of a network device with better prediction performance, for example, a network device with best prediction performance or one of several network devices with best prediction performance, so that performance of the neural network is improved, thereby improving performance of an MLB policy.

It should be noted that the following embodiments are further provided in this application. These embodiments may be independent of the foregoing embodiments or may be combined with the foregoing embodiments. Specifically, the following possible implementations may be included.

In a possible implementation, a third network device obtains an MLB policy and sends the MLB policy to a first network device. For example, the third network device is an operation and management entity, and the implementation includes the following steps: The third network device sends a third query message to the first network device; the first network device feeds back a third acknowledgement message to the third network device based on the third query message, where the acknowledgement message includes information that is of the first network device and that indicates status information; the third network device obtains a third MLB policy by using a third neural network and based on the information that is of the first network device and that indicates status information; the third network device sends the third MLB policy to the first network device; the first network device modifies a first parameter configuration based on the third MLB policy, and feeds back an actual load value to the third network device; and the third network device optimizes the third neural network based on the actual load value that is fed back.

In a possible implementation, a first network device optimizes a first neural network and/or a second neural network based on neural network optimization information sent by a third network device. For example, the third network device is an operation and management entity, and the implementation includes the following steps: The first network device performs one or more methods in the embodiments shown in FIG. 10 to FIG. 16B. Optionally, the first network device sends, to the third network device, a predicted load value, an actual load value, and time information that are obtained by the first network device. The third network device optimizes a third neural network of the third network device based on the predicted load value, the actual load value, and the time information, and then sends neural network optimization information of the third neural network to the first network device. Optionally, the first network device optimizes the first neural network and/or the second neural network based on the neural network optimization information of the third neural network. For the neural network optimization information of the third neural network, refer to related content of the neural network optimization information in S1611b.

Further, in the embodiments described in FIG. 10 to FIG. 16B, the following step may be further included.

The first network device sends one or more of the following first information related to prediction and/or inference to the second network device:
a service type supported by the first network device, for example, an MLB service;
periodicity information or time information of a service supported by the first network device, for example, a periodicity of the MLB service is 30 minutes, that is, the MLB service is performed once every 30 minutes, or information indicating that the first network device performs the MLB service at 10:00, 10:30, and 11:00; or
an indication of output information of a prediction service of the first network device, for example, indicating that output information of the MLB service includes parameter configuration information of the first network device and/or the second network device.

Optionally, the first information related to prediction and/or inference may be included in the foregoing query message.

Optionally, in response to the information related to prediction and/or inference, the second network device may feed back the following second information related to prediction and/or inference to the first network device. The second information may be included in the foregoing acknowledgement message in response to the query message. The second information may include one or more of the following content:
a service type supported by the second network device, for example, an MLB service; or
information that the second network device expects to exchange and a time period in which the second network device expects to perform exchange, where for example, in the acknowledgement message, the second network device may indicate the first network device to feed back a result of predicting, by the first network device, a load of the second network device between 10:00 and 11:00; or the second network device may indicate the first network device to feed back configuration information, between 10:00 and 11:00, of a threshold for a handover between the first network device and the second network device.

Through exchange between the first information and the second information that are related to prediction and/or inference, network devices can negotiate and exchange information related to prediction and/or inference, to avoid an error caused by service misalignment.

In the foregoing embodiments, a network device used as the first network device or the second network device may be a gNB, a CU, a DU, a CU-CP, or a CU-DP. It may be understood that a network device may be used as the first network device, or may be used as the second network device, or may be used as both the first network device and the second network device in the embodiments shown in FIG. 10 to FIG. 16B.

In the foregoing embodiments, a plurality of second network devices may be included. The first network device determines, based on a specific design and implementation, a range of a second network device required for implementing the method.

It may be understood that, detailed descriptions of specific procedures in the foregoing embodiments may be mutually referred or combined, and details are not described herein.

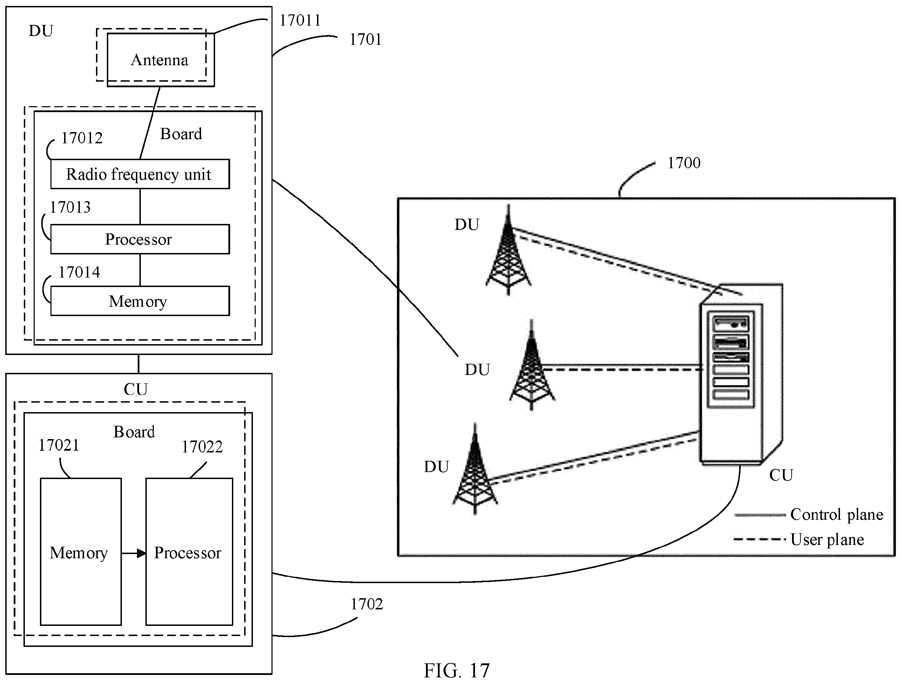

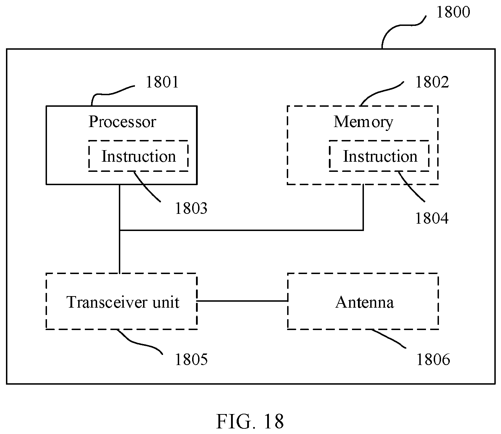

The communication method in the embodiments of this application is described above in detail with reference to FIG. 10 to FIG. 16B. Communication apparatuses in the embodiments of this application are described below in detail with reference to FIG. 17 and FIG. 18.

FIG. 17 is a schematic diagram of a structure of an access network device according to an embodiment of this application, for example, may be a schematic diagram of a structure of a base station. As shown in FIG. 17, the base station may be applied to the system shown in FIG. 1, and performs a function of the first network device or the second network device in the foregoing method embodiments. A base station 1700 may include one or more DUs 1701 and one or more CUs 1702. The CU 1702 may communication with an NG core (next-generation core, NC) or an EPC. The DU 1701 may include at least one antenna 17011, at least one radio frequency unit 17012, at least one processor 17013, and at least one memory 17014. The CU 1702 may include at least one processor 17022 and at least one memory 17021. The CU 1702 and the DU 1701 may communicate with each other through an interface. A control plane (Control plane) interface may be an Fs-C, for example, an F1-C. A user plane (User Plane) interface may be an Fs-U, for example, an F1-U. The DU 1701 and the CU 1702 may be physically disposed together, or may be physically disposed separately, that is, a distributed base station.

The CU 1702 is a control center of the base station, may also be referred to as a processing unit, and is mainly configured to implement a baseband processing function. The DU 1701 is mainly configured to: send and receive a radio frequency signal, perform conversion between a radio frequency signal and a baseband signal, and perform some baseband processing. For example, both the CU 1702 and the DU 1701 may perform related operations of the network device in the foregoing method embodiments.

Specifically, baseband processing on the CU and the DU may be divided based on a protocol layer of a wireless network. For example, functions of a PDCP layer and a protocol layer above the PDCP layer are disposed on the CU, and functions of protocol layers below the PDCP, such as an RLC layer, a MAC layer, and a PHY layer are disposed on the DU.

In addition, optionally, the base station 1700 may include one or more radio frequency units (RUs), one or more DUs, and one or more CUs. The DU may include at least one processor 17013 and at least one memory 17014, the RU may include at least one antenna 17011 and at least one radio frequency unit 17012, and the CU may include at least one processor 17022 and at least one memory 17021.

In an instance, the CU 1702 may include one or more boards. A plurality of boards may jointly support a radio access network (for example, a 5G network) of a single access standard, or may respectively support radio access networks of different access standards (for example, an LTE network, a 5G network, or another network). The memory 17021 and the processor 17022 may serve one or more boards, that is, a memory and a processor may be disposed on each board. Alternatively, a plurality of boards may share a same memory and processor. In addition, a necessary circuit may be further disposed on each board. The DU 1701 may include one or more boards. A plurality of boards may jointly support a radio access network (for example, a 5G network) of a single access standard, or may respectively support radio access networks of different access standards (for example, an LTE network, a 5G network, or another network). The memory 17014 and the processor 17013 may serve one or more boards, that is, a memory and a processor may be disposed on each board. Alternatively, a plurality of boards may share a same memory and processor. In addition, a necessary circuit may be further disposed on each board.

FIG. 18 provides a schematic diagram of a structure of a communication apparatus 1800. The communication apparatus 1800 may be configured to implement the methods described in the foregoing method embodiments. For details, refer to the descriptions in the foregoing method embodiments. The communication apparatus 1800 may be a chip, an access network device (for example, a base station), another network device, or the like.

The communication apparatus 1800 includes one or more processors 1801. The processor 1801 may be a general-purpose processor, a dedicated processor, or the like. For example, the processor 1801 may be a baseband processor or a central processing unit. The baseband processor may be configured to process a communication protocol and communication data. The central processing unit may be configured to control an apparatus (for example, a base station, a terminal, an AMF, or a chip), execute a software program, and process data of the software program. The apparatus may include a transceiver unit configured to input (receive) and output (send) a signal. For example, the apparatus may be a chip, and the transceiver unit may be an input circuit and/or an output circuit or a communication interface of the chip. The chip may be used in a terminal, an access network device (for example, a base station), or a core network device. For another example, the apparatus may be a terminal or an access network device (for example, a base station), and the transceiver unit may be a transceiver, a radio frequency chip, or the like.

The communication apparatus 1800 includes one or more processors 1801. The one or more processors 1801 may implement the methods performed by the first network device and/or the second network device or the operation and management entity in the embodiments shown in FIG. 10 to FIG. 16B.

In a possible design, the communication apparatus 1800 includes a means (means) configured to receive network status information, a predicted load value, an actual load value, an MLB policy, and neural network optimization information from a second network device, and a means (means) configured to modify a configuration parameter of a first network device, and optimize a first neural network and/or a second neural network. Functions of the means may be implemented by using one or more processors. For example, calculation may be performed by using one or more processors, and sending may be performed by using a transceiver, an input/output circuit, or an interface of a chip. For details, refer to related descriptions in the foregoing method embodiments.

In a possible design, the communication apparatus 1800 includes a means (means) configured to send one or more of network status information, a predicted load value, an actual load value, an MLB policy, and neural network optimization information to a second network device, and a means (means) configured to generate the network status information, and run a first neural network and/or a second neural network to generate one or more of the predicted load value, the actual load value, the MLB policy, and the neural network optimization information. For details, refer to related description in the foregoing method embodiments. For example, receiving may be performed by using a transceiver, an input/output circuit, an interface of a chip, and calculation may be performed by using one or more processors.

Optionally, the processor 1801 may further implement another function in addition to the methods in the embodiments shown in FIG. 10 to FIG. 16B.

Optionally, in a design, the processor 1801 may also include instructions 1803. The instructions may be run on the processor, to enable the communication apparatus 1800 to perform the methods described in the foregoing method embodiments.

In another possible design, the communication apparatus 1800 may also include a circuit. The circuit may implement a function of the access network device or the terminal in the foregoing method embodiments.

In another possible design, the communication apparatus 1800 may include one or more memories 1802 that store instructions 1804. The instructions may be run on the processor, to enable the communication apparatus 1800 to perform the methods described in the foregoing method embodiments. Optionally, the memory may further store data. Optionally, the processor may also store instructions and/or data. For example, the one or more memories 1802 may store the MLB policy and the neural network optimization information described in the foregoing embodiments, or other information in the foregoing embodiments, such as the predicted load value and the actual load value. The processor and the memory may be separately disposed, or may be integrated together.

In another possible design, the communication apparatus 1800 may further include a transceiver unit 1805 and an antenna 1806, or include a communication interface. The transceiver unit 1805 may be referred to as a transceiver, a transceiver circuit, or the like, and is configured to implement a receiving/transmitting function of the apparatus by using an antenna 1806. The communication interface (not shown in the figure) may be used for communication between a core network device and an access network device or between access network devices. Optionally, the communication interface may be a wired communication interface, for example, a fiber communication interface.

The processor 1801 may be referred to as a processing unit, and controls an apparatus (for example, a terminal, a base station, or an AMF).

This application further provides a communication system, and the communication system includes one or a combination of the one or more access network devices, the one or more terminals, and the core network device.

It should be understood that the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that, the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of random access memories (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used for implementation, the foregoing embodiments may be entirely or partially implemented in a form of a computer program product. The computer program product includes one or more computer instructions or computer programs. When the computer instruction or the computer program is loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, an optical fiber) or wireless (for example, infrared, radio, or microwave) manner. The computer-readable storage medium may be any available medium accessible by a computer, or include one or more data storage devices such as a server and a data center that are integrated with an available medium. The available medium may be a magnetic medium (for example, a floppy disk, a hard disk, or a magnetic tape), an optical medium (for example, a DVD), or a semiconductor medium. The semiconductor medium may be a solid-state drive.

A person of ordinary skill in the art may be aware that, the units and the algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A skilled person may use different methods to implement the described functions for each particular application, but this implementation should not be considered as beyond the scope of this application.

It may be clearly understood by a person skilled in the art that, for convenient and brief description, for specific working processes of the system, apparatus, and unit described above, refer to corresponding processes in the foregoing method embodiments. Details are not described herein again.

In the several embodiments provided in this application, it should be understood that the disclosed system, communication apparatus, and method may be implemented in other manners. For example, the apparatus embodiment described above is merely an example. For example, division of the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one place, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, wherein the method comprises:
obtaining first network status information of a first network device (S1001);
obtaining information indicating a network status of a second network device (S1002);
obtaining a to-be-effective first mobility load balancing, MLB, policy based on the first network status information of the first network device and the information indicating a network status of the second network device (S1003); and
sending the first MLB policy to the second network device (S1004), wherein
the first MLB policy comprises at least one of the following content:
a configuration parameter used to adjust a load of the first network device and time information corresponding to the configuration parameter used to adjust the load of the first network device;
a configuration parameter used to adjust a load of the second network device and time information corresponding to the configuration parameter used to adjust the load of the second network device; or
reliability information of the first MLB policy.

2. The method according to claim 1, wherein the obtaining information indicating a network status of a second network device (S1002) comprises:
sending first query information to the second network device, wherein the first query information is used to request the information indicating a network status (S1101); and
receiving first acknowledgement information from the second network device, wherein the first acknowledgement information responds to the first query information and carries the information indicating a network status of the second network device (S1102), wherein
the information indicating a network status of the second network device comprises at least one of the following: current network status information of the second network device, network status information predicted by the second network device, or a third predicted load value of the second network device.

3. The method according to claim 1 or 2, wherein the obtaining a to-be-effective first MLB policy based on the first network status information of the first network device and the information indicating a network status of the second network device (S1003) comprises:
obtaining, based on the first network status information of the first network device and the information indicating a network status of the second network device, at least one of a first predicted load value of the first network device at first time in a current MLB policy (S1201(a)) or a second predicted load value of the second network device at the first time in the current MLB policy (S1202(a)); and
obtaining the to-be-effective first MLB policy based on at least one of the first predicted load value or the second predicted load value (S1203(a)).

4. The method according to claim 3, wherein the obtaining (S1201(a)), based on the first network status information of the first network device and the information indicating a network status of the second network device, at least one of a first predicted load value of the first network device at first time in a current MLB policy or a second predicted load value of the second network device at the first time in the current MLB policy (S1201(a)) comprises:
performing at least one of the following by using a first neural network:
predicting a load value of the first network device based on the current MLB policy, to obtain the first predicted load value at the first time (S1201(b)); and
predicting a load value of the second network device based on the current MLB policy, to obtain the second predicted load value at the first time (S1201(c)), wherein
an input of the first neural network comprises the first network status information of the first network device, the information indicating a network status of the second network device, and the current MLB policy, and an output of the first neural network comprises at least one of the first predicted load value or the second predicted load value.

5. The method according to claim 3 or 4, wherein the obtaining (S1201(a)), based on the first network status information of the first network device and the information indicating a network status of the second network device, at least one of a first predicted load value of the first network device at first time in a current MLB policy or a second predicted load value of the second network device at the first time in the current MLB policy (S1201(a)) comprises:
obtaining, based on the first network status information of the first network device and the information indicating a network status of the second network device, the first predicted load value of the first network device at the first time in the current MLB policy (S1303); and
the obtaining (S1203(a)) the to-be-effective first MLB policy based on at least one of the first predicted load value or the second predicted load value (S1203(a)) comprises:
obtaining the to-be-effective first MLB policy by using a second neural network, wherein
an input of the second neural network comprises the information indicating a network status of the second network device or the second predicted load value, and the first predicted load value, and an output of the second neural network comprises the to-be-effective first MLB policy.

6. The method according to any one of claims 3 to 5, further comprising:
obtaining, by using the first neural network, at least one of a fourth predicted load value that is of the first network device at the first time under action of the first MLB policy or a fifth predicted load value that is of the second network device at the first time under action of the first MLB policy (S1401(a)); and
sending at least one of the fourth predicted load value or the fifth predicted load value to the second network device (S1402(a)).

7. The method according to any one of claims 1 to 6, further comprising:
determining that the second network device successfully modifies, based on the first MLB policy, the parameter used to adjust the load of the second network device; and modifying, based on the first MLB policy, the parameter used to adjust the load of the first network device;
obtaining a first actual load value of the first network device at the first time in the first MLB policy, and obtaining, by using the first neural network, the fourth predicted load value that is of the first network device at the first time under action of the first MLB policy; and optimizing at least one of the first neural network or the second neural network based on the fourth predicted load value and the first actual load value; and/or
obtaining a second actual load value of the second network device at the first time in the first MLB policy, and obtaining, by using the first neural network, the fifth predicted load value that is of the second network device at the first time under action of the first MLB policy; and optimizing at least one of the first neural network or the second neural network based on the fifth predicted load value and the second actual load value.

8. A communication method, wherein the method comprises:
sending (S1302), by a second network device, information indicating a network status of the second network device; and
receiving (S1304), by the second network device, a first mobility load balancing, MLB, policy, wherein the first MLB policy is based on the information indicating a network status of the second network device, wherein
the first MLB policy comprises at least one of the following content:
a configuration parameter used to adjust a load of a first network device and time information corresponding to the configuration parameter used to adjust the load of the first network device;
a configuration parameter used to adjust a load of the second network device and time information corresponding to the configuration parameter used to adjust the load of the second network device; or
reliability information of the first MLB policy.

9. The method according to claim 8, wherein the sending, by a second network device, information indicating a network status of the second network device comprises:
receiving (S1101), by the second network device, first query information; and
sending (S1102), by the second network device, first acknowledgement information, wherein the first acknowledgement information responds to the first query information and comprises the information indicating a network status of the second network device, wherein
the information indicating a network status of the second network device comprises at least one of the following: current network status information of the second network device, network status information predicted by the second network device, or a third predicted load value of the second network device.

10. The method according to claim 8 or 9, wherein the method further comprises:
receiving (S1402(c)), by the second network device, at least one of a fourth predicted load value or a fifth predicted load value, wherein
the fourth predicted load value is a load value that is of the first network device at first time and that is predicted in the first MLB policy; and
the fifth predicted load value is a predicted value that is of the second network device at the first time and that is predicted in the first MLB policy.

11. The method according to any one of claims 8 to 10, wherein the method further comprises:
modifying, by the second network device based on the first MLB policy, the parameter used to adjust the load of the second network device, and sending a second actual load value of the second network device at the first time; or
sending, by the second network device, feedback information when the second network device fails to modify the parameter used to adjust the load of the second network device, wherein the feedback information indicates a cause of a failure in modifying a second parameter configuration.

12. The method according to any one of claims 8 to 11, wherein the method further comprises:
obtaining, by the second network device, an eighth predicted load value of the first network device at second time in a current MLB policy, and sending the eighth predicted load value, so that another device obtains accuracy of the eighth predicted load value; or
obtaining, by the second network device, at least one of the eighth predicted load value of the first network device at the second time in the current MLB policy or a ninth predicted load value that is of the second network device at the second time and that is predicted in the current MLB policy, and a fourth actual load value of the second network device at the second time in the current MLB policy; and sending the fourth actual load value and at least one of the eighth predicted load value or the ninth predicted load value, so that another device obtains accuracy of at least one of the eighth predicted load value or the ninth predicted load value.

13. An apparatus, comprising a processor, wherein the processor is coupled to a memory, and the processor is configured to execute a program stored in the memory, so that the apparatus performs the method according to any one of claims 1 to 7.

14. An apparatus, comprising a processor, wherein the processor is coupled to a memory, and the processor is configured to execute a program stored in the memory, so that the apparatus performs the method according to any one of claims 8 to 12.

15. A communication system, comprising the apparatus according to claim 13 and the apparatus according to claim 14.

## Patentansprüche

1. Kommunikationsverfahren, wobei das Verfahren umfasst:
Erhalten von ersten Netzwerkstatusinformationen einer ersten Netzwerkvorrichtung (S1001);
Erhalten von Informationen, die einen Netzwerkstatus einer zweiten Netzwerkvorrichtung anzeigen (S1002);
Erhalten einer wirksam werdenden ersten Mobilitätslastverteilungs(MLB)-Richtlinie basierend auf den ersten Netzwerkstatusinformationen der ersten Netzwerkvorrichtung und den Informationen, die einen Netzwerkstatus der zweiten Netzwerkvorrichtung anzeigen (S1003); und
Senden der ersten MLB-Richtlinie an die zweite Netzwerkvorrichtung (S1004), wobei die erste MLB-Richtlinie mindestens einen der folgenden Inhalte umfasst:
einen Konfigurationsparameter, der verwendet wird, um eine Last der ersten Netzwerkvorrichtung anzupassen und Zeitinformationen, die dem Konfigurationsparameter, der verwendet wird, um die Last der ersten Netzwerkvorrichtung anzupassen, entsprechen;
einen Konfigurationsparameter, der verwendet wird, um eine Last der zweiten Netzwerkvorrichtung anzupassen und Zeitinformationen, die dem Konfigurationsparameter, der verwendet wird, um die Last der zweiten Netzwerkvorrichtung anzupassen, entsprechen; oder
Zuverlässigkeitsinformationen der ersten MLB-Richtlinie.

2. Verfahren nach Anspruch 1, wobei das Erhalten von Informationen, die einen Netzwerkstatus einer zweiten Netzwerkvorrichtung anzeigen (S1002), umfasst:
Senden von ersten Abfrageinformationen an die zweite Netzwerkvorrichtung, wobei die ersten Abfrageinformationen verwendet werden, um die Informationen, die einen Netzwerkstatus anzeigen, anzufordern (S1101); und
Empfangen von ersten Bestätigungsinformationen von der zweiten Netzwerkvorrichtung, wobei die ersten Bestätigungsinformationen auf die ersten Abfrageinformationen antworten und die Informationen, die einen Netzwerkstatus der zweiten Netzwerkvorrichtung anzeigen, tragen (S1102), wobei
die Informationen, die einen Netzwerkstatus der zweiten Netzwerkvorrichtung anzeigen, mindestens eines der folgenden umfassen: aktuelle Netzwerkstatusinformationen der zweiten Netzwerkvorrichtung, durch die zweite Netzwerkvorrichtung vorhergesagte Netzwerkstatusinformationen oder einen dritten vorhergesagten Lastwert der zweiten Netzwerkvorrichtung.

3. Verfahren nach Anspruch 1 oder 2, wobei das Erhalten einer wirksam werdenden ersten MLB-Richtlinie basierend auf den ersten Netzwerkstatusinformationen der ersten Netzwerkvorrichtung und den Informationen, die einen Netzwerkstatus der zweiten Netzwerkvorrichtung anzeigen (S1003), umfasst:
Erhalten, basierend auf den ersten Netzwerkstatusinformationen der ersten Netzwerkvorrichtung und den Informationen, die einen Netzwerkstatus der zweiten Netzwerkvorrichtung anzeigen, mindestens eines von einem ersten vorhergesagten Lastwert der ersten Netzwerkvorrichtung zu einem ersten Zeitpunkt in einer aktuellen MLB-Richtlinie (S1201(a)) oder einem zweiten vorhergesagten Lastwert der zweiten Netzwerkvorrichtung zu dem ersten Zeitpunkt in der aktuellen MLB-Richtlinie (S1202(a)); und
Erhalten der wirksam werdenden ersten MLB-Richtlinie basierend auf mindestens einem von dem ersten vorhergesagten Lastwert oder dem zweiten vorhergesagten Lastwert (S1203(a)).

4. Verfahren nach Anspruch 3, wobei das Erhalten (S1201(a)), basierend auf den ersten Netzwerkstatusinformationen der ersten Netzwerkvorrichtung und den Informationen, die einen Netzwerkstatus der zweiten Netzwerkvorrichtung anzeigen, mindestens eines von einem ersten vorhergesagten Lastwert der ersten Netzwerkvorrichtung zu einem ersten Zeitpunkt in einer aktuellen MLB-Richtlinie oder einem zweiten vorhergesagten Lastwert der zweiten Netzwerkvorrichtung zu dem ersten Zeitpunkt in der aktuellen MLB-Richtlinie (S1201(a)) umfasst:
Durchführen mindestens eines der folgenden durch Verwenden eines ersten neuronalen Netzwerks:
Vorhersagen eines Lastwerts der ersten Netzwerkvorrichtung basierend auf der aktuellen MLB-Richtlinie, um den ersten vorhergesagten Lastwert zu dem ersten Zeitpunkt zu erhalten (S1201(b)); und
Vorhersagen eines Lastwerts der zweiten Netzwerkvorrichtung basierend auf der aktuellen MLB-Richtlinie, um den zweiten vorhergesagten Lastwert zu dem ersten Zeitpunkt zu erhalten (S1201(c)), wobei
eine Eingabe des ersten neuronalen Netzwerks die ersten Netzwerkstatusinformationen der ersten Netzwerkvorrichtung, die Informationen, die einen Netzwerkstatus der zweiten Netzwerkvorrichtung anzeigen, und die aktuelle MLB-Richtlinie umfasst und eine Ausgabe des ersten neuronalen Netzwerks mindestens einen des ersten vorhergesagten Lastwerts oder des zweiten vorhergesagten Lastwerts umfasst.

5. Verfahren nach Anspruch 3 oder 4, wobei das Erhalten (S1201(a)), basierend auf den ersten Netzwerkstatusinformationen der ersten Netzwerkvorrichtung und den Informationen, die einen Netzwerkstatus der zweiten Netzwerkvorrichtung anzeigen, mindestens eines von einem ersten vorhergesagten Lastwert der ersten Netzwerkvorrichtung zu einem ersten Zeitpunkt in einer aktuellen MLB-Richtlinie oder einem zweiten vorhergesagten Lastwert der zweiten Netzwerkvorrichtung zu dem ersten Zeitpunkt in der aktuellen MLB-Richtlinie (S1201(a)) umfasst:
Erhalten, basierend auf den ersten Netzwerkstatusinformationen der ersten Netzwerkvorrichtung und den Informationen, die einen Netzwerkstatus der zweiten Netzwerkvorrichtung anzeigen, des ersten vorhergesagten Lastwerts der ersten Netzwerkvorrichtung zu dem ersten Zeitpunkt in der aktuellen MLB-Richtlinie (S1303); und
das Erhalten (S1203(a)) der wirksam werdenden ersten MLB-Richtlinie basierend auf mindestens einem von dem ersten vorhergesagten Lastwert oder dem zweiten vorhergesagten Lastwert (S1203(a)) umfasst:
Erhalten der wirksam werdenden ersten MLB-Richtlinie durch Verwenden eines zweiten neuronalen Netzwerks, wobei
eine Eingabe des zweiten neuronalen Netzwerks die Informationen, die einen Netzwerkstatus der zweiten Netzwerkvorrichtung oder den zweiten vorhergesagten Lastwert anzeigen, und den ersten vorhergesagten Lastwert umfasst und eine Ausgabe des zweiten neuronalen Netzwerks die wirksam werdende erste MLB-Richtlinie umfasst.

6. Verfahren nach einem der Ansprüche 3 bis 5, das ferner umfasst:
Erhalten, durch Verwenden des ersten neuronalen Netzwerks, mindestens eines von einem vierten vorhergesagten Lastwert, der von der ersten Netzwerkvorrichtung zu dem ersten Zeitpunkt unter Einwirkung der ersten MLB-Richtlinie ist, oder einem fünften vorhergesagten Lastwert, der von der zweiten Netzwerkvorrichtung zu dem ersten Zeitpunkt unter Einwirkung der ersten MLB-Richtlinie ist (S1401(a)); und
Senden mindestens eines von dem vierten vorhergesagten Lastwert oder dem fünften vorhergesagten Lastwert an die zweite Netzwerkvorrichtung (S1402(a)).

7. Verfahren nach einem der Ansprüche 1 bis 6, das ferner umfasst:
Bestimmen, dass die zweite Netzwerkvorrichtung, basierend auf der ersten MLB-Richtlinie, den Parameter, der verwendet wird, um die Last der zweiten Netzwerkvorrichtung anzupassen, erfolgreich modifiziert; und Modifizieren, basierend auf der ersten MLB-Richtlinie, des Parameters, der verwendet wird, um die Last der ersten Netzwerkvorrichtung anzupassen;
Erhalten eines ersten tatsächlichen Lastwerts der ersten Netzwerkvorrichtung zu dem ersten Zeitpunkt in der ersten MLB-Richtlinie und Erhalten, durch Verwenden des ersten neuronalen Netzwerks, des vierten vorhergesagten Lastwerts, der von der ersten Netzwerkvorrichtung zu dem ersten Zeitpunkt unter Einwirkung der ersten MLB-Richtlinie ist; und Optimieren mindestens eines von dem ersten neuronalen Netzwerk oder dem zweiten neuronalen Netzwerk basierend auf dem vierten vorhergesagten Lastwert und dem ersten tatsächlichen Lastwert; und/oder
Erhalten eines zweiten tatsächlichen Lastwerts der zweiten Netzwerkvorrichtung zu dem ersten Zeitpunkt in der ersten MLB-Richtlinie und Erhalten, durch Verwenden des ersten neuronalen Netzwerks, des fünften vorhergesagten Lastwerts, der von der zweiten Netzwerkvorrichtung zu dem ersten Zeitpunkt unter Einwirkung der ersten MLB-Richtlinie ist; und Optimieren mindestens eines von dem ersten neuronalen Netzwerk oder dem zweiten neuronalen Netzwerk basierend auf dem fünften vorhergesagten Lastwert und dem zweiten tatsächlichen Lastwert.

8. Kommunikationsverfahren, wobei das Verfahren umfasst:
Senden (S1302), durch eine zweite Netzwerkvorrichtung, von Informationen, die einen Netzwerkstatus der zweiten Netzwerkvorrichtung anzeigen; und
Empfangen (S1304), durch die zweite Netzwerkvorrichtung, einer ersten Mobilitätslastverteilungs(MLB)-Richtlinie, wobei die erste MLB-Richtlinie auf den Informationen, die einen Netzwerkstatus der zweiten Netzwerkvorrichtung anzeigen, basiert, wobei
die erste MLB-Richtlinie mindestens einen der folgenden Inhalte umfasst:
einen Konfigurationsparameter, der verwendet wird, um eine Last einer ersten Netzwerkvorrichtung anzupassen und Zeitinformationen, die dem Konfigurationsparameter, der verwendet wird, um die Last der ersten Netzwerkvorrichtung anzupassen, entsprechen;
einen Konfigurationsparameter, der verwendet wird, um eine Last der zweiten Netzwerkvorrichtung anzupassen und Zeitinformationen, die dem Konfigurationsparameter, der verwendet wird, um die Last der zweiten Netzwerkvorrichtung anzupassen, entsprechen; oder
Zuverlässigkeitsinformationen der ersten MLB-Richtlinie.

9. Verfahren nach Anspruch 8, wobei das Senden, durch eine zweite Netzwerkvorrichtung, von Informationen, die einen Netzwerkstatus der zweiten Netzwerkvorrichtung anzeigen, umfasst:
Empfangen (S1101), durch die zweite Netzwerkvorrichtung, von ersten Abfrageinformationen; und
Senden (S1102), durch die zweite Netzwerkvorrichtung, von ersten Bestätigungsinformationen, wobei die ersten Bestätigungsinformationen auf die ersten Abfrageinformationen antworten und die Informationen, die einen Netzwerkstatus der zweiten Netzwerkvorrichtung anzeigen, umfassen, wobei
die Informationen, die einen Netzwerkstatus der zweiten Netzwerkvorrichtung anzeigen, mindestens eines der folgenden umfassen: aktuelle Netzwerkstatusinformationen der zweiten Netzwerkvorrichtung, durch die zweite Netzwerkvorrichtung vorhergesagte Netzwerkstatusinformationen oder einen dritten vorhergesagten Lastwert der zweiten Netzwerkvorrichtung.

10. Verfahren nach Anspruch 8 oder 9, wobei das Verfahren ferner umfasst:
Empfangen (S1402(c)), durch die zweite Netzwerkvorrichtung, mindestens eines von einem vierten vorhergesagten Lastwert oder einem fünften vorhergesagten Lastwert, wobei
der vierte vorhergesagte Lastwert ein Lastwert ist, der von der ersten Netzwerkvorrichtung zu einem ersten Zeitpunkt ist und der in der ersten MLB-Richtlinie vorhergesagt wird; und
der fünfte vorhergesagte Lastwert ein vorhergesagter Wert ist, der von der zweiten Netzwerkvorrichtung zu dem ersten Zeitpunkt ist und der in der ersten MLB-Richtlinie vorhergesagt wird.

11. Verfahren nach einem der Ansprüche 8 bis 10, wobei das Verfahren ferner umfasst:
Modifizieren, durch die zweite Netzwerkvorrichtung basierend auf der ersten MLB-Richtlinie, des Parameters, der verwendet wird, um die Last der zweiten Netzwerkvorrichtung anzupassen, und Senden eines zweiten tatsächlichen Lastwerts der zweiten Netzwerkvorrichtung zu dem ersten Zeitpunkt; oder
Senden, durch die zweite Netzwerkvorrichtung, von Rückmeldungsinformationen, wenn die zweite Netzwerkvorrichtung es unterlässt, den Parameter, der verwendet wird, um die Last der zweiten Netzwerkvorrichtung anzupassen, zu modifizieren, wobei die Rückmeldungsinformationen eine Ursache einer Unterlassung des Modifizierens einer zweiten Parameterkonfiguration anzeigen.

12. Verfahren nach einem der Ansprüche 8 bis 11, wobei das Verfahren ferner umfasst:
Erhalten, durch die zweite Netzwerkvorrichtung, eines achten vorhergesagten Lastwerts der ersten Netzwerkvorrichtung zu einem zweiten Zeitpunkt in einer aktuellen MLB-Richtlinie und Senden des achten vorhergesagten Lastwerts, sodass eine andere Vorrichtung eine Genauigkeit des achten vorhergesagten Lastwerts erhält; oder
Erhalten, durch die zweite Netzwerkvorrichtung, von mindestens einem von dem achten vorhergesagten Lastwert der ersten Netzwerkvorrichtung zu dem zweiten Zeitpunkt in der aktuellen MLB-Richtlinie oder einem neunten vorhergesagten Lastwert, der von der zweiten Netzwerkvorrichtung zu dem zweiten Zeitpunkt ist und der in der aktuellen MLB-Richtlinie vorhergesagt wird, und einem vierten tatsächlichen Lastwert der zweiten Netzwerkvorrichtung zu dem zweiten Zeitpunkt in der aktuellen MLB-Richtlinie; und Senden des vierten tatsächlichen Lastwerts und mindestens eines von dem achten vorhergesagten Lastwert oder dem neunten vorhergesagten Lastwert, sodass eine andere Vorrichtung die Genauigkeit von mindestens einem von dem achten vorhergesagten Lastwert oder dem neunten vorhergesagten Lastwert erhält.

13. Einrichtung, die einen Prozessor umfasst, wobei der Prozessor mit einem Speicher gekoppelt ist und der Prozessor konfiguriert ist, um ein Programm, das in dem Speicher gespeichert ist, auszuführen, sodass die Einrichtung das Verfahren nach einem der Ansprüche 1 bis 7 durchführt.

14. Einrichtung, die einen Prozessor umfasst, wobei der Prozessor mit einem Speicher gekoppelt ist und der Prozessor konfiguriert ist, um ein Programm, das in dem Speicher gespeichert ist, auszuführen, sodass die Einrichtung das Verfahren nach einem der Ansprüche 8 bis 12 durchführt.

15. Kommunikationssystem, das die Einrichtung nach Anspruch 13 und die Einrichtung nach Anspruch 14 umfasst.

## Revendications

1. Procédé de communication, dans lequel le procédé comprend :
l'obtention de premières informations d'état de réseau d'un premier dispositif de réseau (S1001) ;
l'obtention d'informations indiquant un état de réseau d'un second dispositif de réseau (S1002) ;
l'obtention d'une première politique d'équilibrage de charge de mobilité, MLB, devant entrer en vigueur sur la base des premières informations d'état de réseau du premier dispositif de réseau et des informations indiquant un état de réseau du second dispositif de réseau (S1003) ; et
l'envoi de la première politique MLB au second dispositif de réseau (S1004), dans lequel la première politique MLB comprend au moins l'un des contenus suivants :
un paramètre de configuration utilisé pour ajuster une charge du premier dispositif de réseau et des informations temporelles correspondant au paramètre de configuration utilisé pour ajuster la charge du premier dispositif de réseau ;
un paramètre de configuration utilisé pour ajuster une charge du second dispositif de réseau et des informations temporelles correspondant au paramètre de configuration utilisé pour ajuster la charge du second dispositif de réseau ; ou
des informations de fiabilité de la première politique MLB.

2. Procédé selon la revendication 1, dans lequel l'obtention d'informations indiquant un état de réseau d'un second dispositif de réseau (S1002) comprend :
l'envoi de premières informations d'interrogation au second dispositif de réseau, dans lequel les premières informations d'interrogation sont utilisées pour demander les informations indiquant un état de réseau (S1101) ; et
la réception de premières informations d'accusé de réception en provenance du second dispositif de réseau, dans lequel les premières informations d'accusé de réception répondent aux premières informations d'interrogation et portent les informations indiquant un état de réseau du second dispositif de réseau (S1102), dans lequel les informations indiquant un état de réseau du second dispositif de réseau comprennent au moins l'un de ce qui suit : des informations d'état actuel de réseau du second dispositif de réseau, des informations d'état de réseau prédites par le second dispositif de réseau, ou une troisième valeur de charge prédite du second dispositif de réseau.

3. Procédé selon la revendication 1 ou 2, dans lequel l'obtention d'une première politique MLB devant entrer en vigueur sur la base des premières informations d'état de réseau du premier dispositif de réseau et des informations indiquant un état de réseau du second dispositif de réseau (S1003) comprend :
l'obtention, sur la base des premières informations d'état de réseau du premier dispositif de réseau et des informations indiquant un état de réseau du second dispositif de réseau, d'au moins l'une parmi une première valeur de charge prédite du premier dispositif de réseau à un premier moment dans une politique MLB actuelle (S1201(a)) ou une deuxième valeur de charge prédite du second dispositif de réseau au premier moment dans la politique MLB actuelle (S1202(a)) ; et
l'obtention de la première politique MLB devant entrer en vigueur sur la base d'au moins l'une parmi la première valeur de charge prédite ou la deuxième valeur de charge prédite (S1203(a)).

4. Procédé selon la revendication 3, dans lequel l'obtention (S1201(a)), sur la base des premières informations d'état de réseau du premier dispositif de réseau et des informations indiquant un état de réseau du second dispositif de réseau, d'au moins l'une parmi une première valeur de charge prédite du premier dispositif de réseau à un premier moment dans une politique MLB actuelle ou une deuxième valeur de charge prédite du second dispositif de réseau au premier moment dans la politique MLB actuelle (S1201(a)) comprend :
la réalisation d'au moins l'un de ce qui suit en utilisant un premier réseau neuronal :
la prédiction d'une valeur de charge du premier dispositif de réseau sur la base de la politique MLB actuelle, pour obtenir la première valeur de charge prédite au premier moment (S1201(b)) ; et
la prédiction d'une valeur de charge du second dispositif de réseau sur la base de la politique MLB actuelle, pour obtenir la deuxième valeur de charge prédite au premier moment (S1201(c)), dans lequel
une entrée du premier réseau neuronal comprend les premières informations d'état de réseau du premier dispositif de réseau, les informations indiquant un état de réseau du second dispositif de réseau, et la politique MLB actuelle, et une sortie du premier réseau neuronal comprend au moins l'une parmi la première valeur de charge prédite ou la deuxième valeur de charge prédite.

5. Procédé selon la revendication 3 ou 4, dans lequel l'obtention (S1201(a)), sur la base des premières informations d'état de réseau du premier dispositif de réseau et des informations indiquant un état de réseau du second dispositif de réseau, d'au moins l'une parmi une première valeur de charge prédite du premier dispositif de réseau à un premier moment dans une politique MLB actuelle ou une deuxième valeur de charge prédite du second dispositif de réseau au premier moment dans la politique MLB actuelle (S1201(a)) comprend :
l'obtention, sur la base des premières informations d'état de réseau du premier dispositif de réseau et des informations indiquant un état de réseau du second dispositif de réseau, de la première valeur de charge prédite du premier dispositif de réseau au premier moment dans la politique MLB actuelle (S1303) ; et
l'obtention (S1203(a)) de la première politique MLB devant entrer en vigueur sur la base d'au moins l'une parmi la première valeur de charge prédite ou la deuxième valeur de charge prédite (S1203(a)) comprend :
l'obtention de la première politique MLB devant entrer en vigueur en utilisant un second réseau neuronal, dans lequel
une entrée du second réseau neuronal comprend les informations indiquant un état de réseau du second dispositif de réseau ou la deuxième valeur de charge prédite, et la première valeur de charge prédite, et une sortie du second réseau neuronal comprend la première politique MLB devant entrer en vigueur.

6. Procédé selon l'une quelconque des revendications 3 à 5, comprenant en outre :
l'obtention, en utilisant le premier réseau neuronal, d'au moins l'une parmi une quatrième valeur de charge prédite qui provient du premier dispositif de réseau au premier moment sous l'action de la première politique MLB ou une cinquième valeur de charge prédite qui provient du second dispositif de réseau au premier moment sous l'action de la première politique MLB (S1401(a)) ; et
l'envoi d'au moins l'une parmi la quatrième valeur de charge prédite ou la cinquième valeur de charge prédite au second dispositif de réseau (S1402(a)).

7. Procédé selon l'une quelconque des revendications 1 à 6, comprenant en outre :
la détermination du fait que le second dispositif de réseau modifie avec succès, sur la base de la première politique MLB, le paramètre utilisé pour ajuster la charge du second dispositif de réseau ; et la modification, sur la base de la première politique MLB, du paramètre utilisé pour ajuster la charge du premier dispositif de réseau ;
l'obtention d'une première valeur de charge réelle du premier dispositif de réseau au premier moment dans la première politique MLB, et l'obtention, en utilisant le premier réseau neuronal, de la quatrième valeur de charge prédite qui provient du premier dispositif de réseau au premier moment sous l'action de la première politique MLB ;
et l'optimisation d'au moins l'un parmi le premier réseau neuronal ou le second réseau neuronal sur la base de la quatrième valeur de charge prédite et de la première valeur de charge réelle ; et/ou
l'obtention d'une deuxième valeur de charge réelle du second dispositif de réseau au premier moment dans la première politique MLB, et l'obtention, en utilisant le premier réseau neuronal, de la cinquième valeur de charge prédite qui provient du second dispositif de réseau au premier moment sous l'action de la première politique MLB ;
et l'optimisation d'au moins l'un parmi le premier réseau neuronal ou le second réseau neuronal sur la base de la cinquième valeur de charge prédite et de la deuxième valeur de charge réelle.

8. Procédé de communication, dans lequel le procédé comprend :
l'envoi (S1302), par un second dispositif de réseau, d'informations indiquant un état de réseau du second dispositif de réseau ; et
la réception (S1304), par le second dispositif de réseau, d'une première politique d'équilibrage de charge de mobilité, MLB, dans lequel la première politique MLB est basée sur les informations indiquant un état de réseau du second dispositif de réseau, dans lequel
la première politique MLB comprend au moins l'un des contenus suivants :
un paramètre de configuration utilisé pour ajuster une charge d'un premier dispositif de réseau et des informations temporelles correspondant au paramètre de configuration utilisé pour ajuster la charge du premier dispositif de réseau ;
un paramètre de configuration utilisé pour ajuster une charge du second dispositif de réseau et des informations temporelles correspondant au paramètre de configuration utilisé pour ajuster la charge du second dispositif de réseau ; ou
des informations de fiabilité de la première politique MLB.

9. Procédé selon la revendication 8, dans lequel l'envoi, par un second dispositif de réseau, d'informations indiquant un état de réseau du second dispositif de réseau comprend :
la réception (S1101), par le second dispositif de réseau, de premières informations d'interrogation ; et
l'envoi (S1102), par le second dispositif de réseau, de premières informations d'accusé de réception, dans lequel les premières informations d'accusé de réception répondent aux premières informations d'interrogation et comprennent les informations indiquant un état de réseau du second dispositif de réseau, dans lequel les informations indiquant un état de réseau du second dispositif de réseau comprennent au moins l'un de ce qui suit : des informations d'état actuel de réseau du second dispositif de réseau, des informations d'état de réseau prédites par le second dispositif de réseau, ou une troisième valeur de charge prédite du second dispositif de réseau.

10. Procédé selon la revendication 8 ou 9, dans lequel le procédé comprend en outre :
la réception (S1402(c)), par le second dispositif de réseau, d'au moins l'une parmi une quatrième valeur de charge prédite ou une cinquième valeur de charge prédite, dans lequel
la quatrième valeur de charge prédite est une valeur de charge qui provient du premier dispositif de réseau à un premier moment et qui est prédite dans la première politique MLB ; et
la cinquième valeur de charge prédite est une valeur prédite qui provient du second dispositif de réseau au premier moment et qui est prédite dans la première politique MLB.

11. Procédé selon l'une quelconque des revendications 8 à 10, dans lequel le procédé comprend en outre : la modification, par le second dispositif de réseau sur la base de la première politique MLB, du paramètre utilisé pour ajuster la charge du second dispositif de réseau, et l'envoi d'une deuxième valeur de charge réelle du second dispositif de réseau au premier moment ; ou
l'envoi, par le second dispositif de réseau, d'informations de rétroaction lorsque le second dispositif de réseau ne parvient pas à modifier le paramètre utilisé pour ajuster la charge du second dispositif de réseau, dans lequel les informations de rétroaction indiquent une cause d'un échec dans la modification d'une seconde configuration de paramètre.

12. Procédé selon l'une quelconque des revendications 8 à 11, dans lequel le procédé comprend en outre :
l'obtention, par le second dispositif de réseau, d'une huitième valeur de charge prédite du premier dispositif de réseau à un second moment dans une politique MLB actuelle, et l'envoi de la huitième valeur de charge prédite, de sorte qu'un autre dispositif obtient une précision de la huitième valeur de charge prédite ; ou
l'obtention, par le second dispositif de réseau, d'au moins l'une parmi la huitième valeur de charge prédite du premier dispositif de réseau au second moment dans la politique MLB actuelle ou une neuvième valeur de charge prédite qui provient du second dispositif de réseau au second moment et qui est prédite dans la politique MLB actuelle, et une quatrième valeur de charge réelle du second dispositif de réseau au second moment dans la politique MLB actuelle ; et l'envoi de la quatrième valeur de charge réelle et d'au moins l'une parmi la huitième valeur de charge prédite ou la neuvième valeur de charge prédite, de sorte qu'un autre dispositif obtient une précision d'au moins l'une parmi la huitième valeur de charge prédite ou la neuvième valeur de charge prédite.

13. Appareil, comprenant un processeur, dans lequel le processeur est couplé à une mémoire, et le processeur est configuré pour exécuter un programme stocké dans la mémoire, de sorte que l'appareil réalise le procédé selon l'une quelconque des revendications 1 à 7.

14. Appareil, comprenant un processeur, dans lequel le processeur est couplé à une mémoire, et le processeur est configuré pour exécuter un programme stocké dans la mémoire, de sorte que l'appareil réalise le procédé selon l'une quelconque des revendications 8 à 12.

15. Système de communication, comprenant l'appareil selon la revendication 13 et l'appareil selon la revendication 14.
